# EUROPEAN PATENT SPECIFICATION

(11) **EP 3 715 118 B1**
(45) Date of publication and mention of the grant of the patent: **03.05.2023**
(21) Application number: 19165115.7
(22) Date of filing: 26.03.2019
(51) Int. Cl.: B33Y 30/00, B33Y 10/00, B33Y 50/00, A23G 1/00, A23G 1/04, A23G 1/20, A23G 7/00, B29C 64/165

(54) **ADDITIVE MANUFACTURING OF A CHOCOLATE FOOD PRODUCT**
GENERATIVE FERTIGUNG EINES SCHOKOLADENLEBENSMITTELPRODUKTS
FABRICATION ADDITIVE D'UN PRODUIT ALIMENTAIRE À BASE DE CHOCOLAT

(43) Date of publication of application: 30.09.2020
(73) Proprietor: Chocoladefabriken Lindt & Sprüngli AG, 8802 Kilchberg (CH)
(72) Inventor: GEBHARDT, Andreas, 52070 Aachen (DE); KESSLER, Julia, 52074 Aachen (DE); MITTLER, Lukas, 52064 Aachen (DE); RADERMACHER, Daniel, 50996 Köln (DE)
(74) Representative: Maiwald GmbH

(56) References cited:
- WO-A1-2018/149882
- US-A1- 2008 260 918

## Description

### Field of the invention

The invention generally relates to the field of manufacturing a food product based on additive manufacturing and/or binder jetting. Particularly, the invention relates to an additive manufacturing apparatus for manufacturing a food product from a chocolate, milk and/or cocoa composition. The invention also relates to the use of such additive manufacturing apparatus for manufacturing a food product from a chocolate, milk and/or cocoa composition. Further, the invention relates to a method or process of manufacturing such food product based on additive manufacturing and/or binder deposition printing.

### Technical Background

Additive manufacturing, also referred to as 3D printing (three-dimensional, 3D, printing), is an emerging technology allowing to manufacture products with various geometries, shapes, forms and/or textures. Using additive manufacturing, three dimensional objects or models can be generated by printing the desired materials in layers. Numerous different additive manufacturing techniques have been developed in recent years, each with distinct advantages and disadvantages. Common 3D printing methods are extrusion printing, light polymerized printing, and powder bed printing, each of which can be further divided into specific subcategories.

For instance, during extrusion 3D printing, the desired material is melted and extruded though a nozzle to form a first layer. The material is solidified by cooling and further material is extruded at predetermined positions through a nozzle to form a second layer on top of the first layer. This way, complex geometries can be realized. Such extrusion printing process, however, is only suitable for certain materials.

Food products comprising chocolate usually have been printed using fused deposition modeling, which is a form of extrusion 3D printing. In this process the chocolate material is liquefied and extruded through a nozzle. The extruded chocolate is then cooled and thereby solidified and the next layer is subsequently added. However, this process requires that the chocolate material is solidified before the next layer is added. This makes the printing process time consuming. The printed liquid chocolate can be cooled to accelerate the solidification. However, cooling the chocolate by a cooling element is not energy efficient and still requires the chocolate to be cooled for a certain time period. Moreover, the chocolates printed using fused deposition modeling usually do not fulfill the requirements of the German regulation relating to cocoa and chocolate products (in the following referred to as German KakaoV 2003) of 15 December 2003, published in the Bundesgesetzblatt (German Federal Law Gazette) I, volume 63, page 2738 on 23 December 2003, which implements the EU directive 2000/36 of the European Parliament and the Council of 23 June 2000 as amended on 30 September 2008, published in the Bundesgesetzblatt (German Federal Law Gazette) I, volume 44, page 1911 on 10 October 2008.

Moreover, the manufacture of complex 3D figures based on extrusion 3D printing may require the use of a support element during the printing process to avoid collapse of the fragile structure during the manufacturing process. The support element must be tailored to the specific 3D figure or model and is usually not recyclable. Additionally, the support element must be separated from the 3D figure after the 3D printing process, which can be time consuming and may leave an uneven surface at the attachment points.

Document US 2008/0260918 A1 relates to a manufacturing method of a three-dimensional food by rapid prototyping. Therein, a figure or word character is built into a three-dimensional model and transformed into a digital file. A rapid prototyping machine is used to build the three-dimensional food, and then the finished goods of the three-dimensional food are produced.

Document WO 2018/149882 A1 relates to a chocolate powder comprising chocolate liquor and sugar; a binder comprising (a) chocolate liquor and cocoa butter, or (b) deodorized cocoa butter, or (c) refined cocoa butter, or (d) aqueous ethanol containing ethanol in a concentration of 45 to 75 %by volume.

### Summary of the invention

It may therefore be desirable to provide for an improved additive manufacturing apparatus and/or an improved additive manufacturing method for manufacturing a food product comprising a chocolate, milk and/or cocoa composition. The apparatus and method according to the present disclosure may particularly allow to at least partly overcome at least some of the drawbacks mentioned hereinabove.

A first aspect of the present disclosure relates to an additive manufacturing apparatus for manufacturing a food product from and/or based on a chocolate, milk and/or cocoa composition (or mixture). Generally, the food product according to the present disclosure may be edible and/or may refer to a layered food product, a chocolate product, and/or a layered model. The additive manufacturing apparatus comprises a storage container having a storage volume and/or a storage compartment, wherein the storage container is configured to be at least partially filled with a chocolate powder and comprises a storage container platform displaceably arranged and/or displaceable along a displacement axis. Further, the additive manufacturing apparatus comprises a building container having a building volume and/or building compartment, wherein the building container is configured to be at least partially filled with the chocolate powder and comprises a building container platform displaceably arranged and/or displaceable along the displacement axis. Furthermore, the additive manufacturing apparatus comprises at least one controller configured to control displacement and/or movement of the storage container platform and the building container platform, such that the storage container platform and the building container platform are displaced in opposite directions relative to each other along the displacement axis. The additive manufacturing apparatus further comprises a wiper and/or wiping device configured to convey an amount, e.g. a predetermined amount, of the chocolate powder from the storage container to the building container to form a printing layer of the chocolate powder in the building container. Therein, the printing layer may refer to a substantially even layer of chocolate powder, e.g. a layer with even thickness, arranged in the building container. The additive manufacturing apparatus further comprises an application system configured to apply and/or dispense a binder material to the printing layer, wherein the binder material comprises at least cocoa butter. Therein, the application system comprises at least one nozzle for dispensing the binder material, at least one heating element for heating the binder material, and at least one valve for controlling a flow of the binder material, e.g. a flow of the binder material through the nozzle. The application system is movable and/or displaceable along at least two axes relative to the building container. The at least two axes, along which the application system is movable, may for example be transverse and/or perpendicular to the displacement axis. Further, the controller is configured to control a movement (and/or displacement) of the application system, a temperature of the binder material based on controlling the at least one heating element, and the at least one valve, such that the binder material is kept in a flowable condition (e.g. during manufacturing the food product) and is selectively applied to the printing layer to manufacture the food product and/or to manufacture a layer of the food product.

The additive manufacturing apparatus may advantageously allow manufacturing an edible food product from the chocolate, milk and/or cocoa composition in an efficient and cost-sensitive manner, while also ensuring a high-quality and constant texture of the manufactured products. Particularly, the food product may advantageously fulfil the requirements of the German KakaoV 2003. Moreover, food products with nearly arbitrary shapes, geometries and/or forms can be manufactured with high precision. When compared e.g. to conventional extrusion 3D printing, the additive manufacturing apparatus according to the present disclosure allows using high-quality constituents or materials of the food product, including the chocolate powder and the binder material, wherein the quality of the constituents may not be adversely affected by the manufacturing process, e.g. because a temperature of the constituents, particularly the binder material, can be precisely adjusted and controlled according to the specific constraints of the processed materials. Further, the additive manufacturing apparatus according to the present disclosure allows individualizing a shape of the food product by customers or consumers. Apart from that, the apparatus advantageously allows manufacturing the food product without the need for a mold and/or any supporting structure. This may advantageously reduce production costs and development time for the food product, may be advantageous from an ecological perspective, and may result in a food product with increased surface smoothness and/or an improved contour.

Here and in the following, the controller may refer to a control unit, a control arrangement, and/or a control circuitry. The controller may comprise one or more processors for executing software instructions. The controller may comprise and/or be coupled to a data storage device, in which e.g. the software instructions may be stored. Therein, the software instructions, when executed by one or more processors of the controller and/or when executed by the controller, can instruct the controller and/or the apparatus to perform one or more functions and/or functionalities described with reference to the apparatus above and in the following. Likewise, the software instructions, when executed by one or more processors of the controller and/or when executed by the controller, can instruct the controller and/or the apparatus to perform one or more steps of the method of manufacturing the food product according to the third aspect of the present disclosure, as described in detail hereinbelow.

According to the present disclosure, the application system may refer to e.g. an application device, an applicator, a printing head, a nozzle head and/or a dispenser. Preferably, the application system comprises the at least one nozzle for dispensing the binder material onto the printing layer, the at least one heating element for heating and/or tempering the binder material, and the at least one valve for controlling the flow of binder material through the nozzle. Therein, the flow of binder material may be given as an amount of binder material dispensed per unit time and/or as an amount of binder material dispensed per unit time and per unit area, which area may e.g. refer to a cross-section of the nozzle and/or the valve.

The at least one heating element of the application system may be arranged adjacent to the nozzle and/or to the valve. This may ensure that the binder material can be kept and/or maintained at a sufficiently high temperature such that the binder material can be reliably dispensed from the nozzle, e.g. without adhering to and/or clogging the nozzle and/or the valve. The heating element may be a resistive heating element, an inductive heating element and/or any other type of heating element. The heating element and/or a temperature thereof may be controlled and/or adjusted by the controller, e.g. by providing a respective control signal to the heating element.

Optionally, the application system may comprise at least one temperature sensor for determining a temperature of the binder material in the application system. For instance, the controller may be configured to process a signal of the temperature sensor, thereby determining the temperature of the binder material. Further, the controller may be configured to actuate the heating element in response to and/or in accordance with the temperature sensor, e.g. in response to determining that the temperature of the binder material falls below a predetermined threshold, such as e.g. 25°C, 28°C, 30°C, 35°C, 40°C, 45°C, 50°C, 55°, 60°C, 65°C, 70°C and/or 75°C. Therein, the heating element may be configured to temper, heat and/or cool the binder material and/or the controller may be configured to actuate the heating element to temper, heat and/or cool the binder material.

The at least one valve of the application system can be arranged upstream the nozzle to allow controlling the flow of binder material through the nozzle. Alternatively, however, the valve can be located downstream the nozzle. Generally, the valve may comprise one or more movable components allowing to precisely adjust and/or control the flow of binder material. Particularly, the valve may be electronically controlled by the controller, e.g. by providing a respective control signal to the valve. Any type of electronically controlled or controllable valve may be utilized. The valve can have an open position allowing binder material to pass through the valve and a closed position preventing binder material from passing through the valve. Further, the valve can comprise a plurality of intermediate positions between the open and the closed position to precisely control and/or adjust, e.g. to reduce or increase, the flow of the binder material. For instance, the valve can comprise a plunger, which can be actuated by an actuator of the valve, wherein said actuator can be controlled by the controller. Alternatively or additionally, the valve can comprise a piezo electric valve element, e.g. having low cycle times, allowing to control the binder material flow.

Here and in the following, the term flowable condition of the binder material may mean that the binder material is heated and/or tempered to a sufficiently high temperature (e.g. above room temperature), such that a viscosity of the binder material is sufficiently reduced and/or such that the binder material is in a liquid or fluid material condition. Therein, the binder material may be heated and/or tempered such that it comprises a viscosity below about 2 Pa*s, for example below about 1.5 Pa*s, below about 1.2 Pa*s, below about 1.0 Pa*s, preferably below about 0.9 Pa*s, and more preferably about 0.8 Pa*s. A yielding point (or liquid limit) of the binder material may e.g. be about 8 Pa to 20 Pa, for example about 8 Pa to 11 Pa, preferably about 9 Pa to 10 Pa. Accordingly, the binder material may be heated and/or tempered such that the yielding point is reached. Further, a temperature of the binder material may range from about 25°C to about 75°C, for example about 40°C to about 75°C, about 50°C to about 72°C, preferably about 60°C to about 69°C, and even more preferably about 60°C to about 65°C. Therein, the controller may be configured to control the heating element, such that one or more of the aforementioned conditions for the binder material are met.

The additive manufacturing apparatus can comprise a mounting, mounting structure and/or support structure for the application system, which is configured to displace the application system in a controlled manner, e.g. in response to a respective control signal provided by the controller to the application system. Thereby, the application system can be displaced along at least two axes, preferably two axes, which are transverse, orthogonal and/or perpendicular to the displacement axis. The controller can be configured to displace, actuate and/or move the application system along a predetermined path and to actuate the valve of the application system during movement of the application system, such that the binder material can be deposited and/or dispensed onto the chocolate powder along the predetermined path to form a layer of the food product. Therein, the application system may be moved such that a contour, a filling and/or an infill of the food product (or a layer thereof) can be generated by applying the binder material to the printing layer. The predetermined path can be generated with the help of a slicing software, which can optionally take into account the special properties of models or products manufactured from a chocolate, milk and/or cocoa composition.

The wiper may refer to a wiping device which may be part of and/or which may be attached to the application system. Therein, the wiper can be moved across (and/or over) the storage container and across (and/or over) the building container, e.g. along a wiping direction, to convey chocolate powder from the storage container to the building container. The controller may be configured to control movement and/or a position of the wiper. The movement or position of the wiper can either be controlled independent from the application system or the wiper can be moved in accordance with the application system, e.g. if the wiper is attached and/or mechanically fixed to the application system. Further, a longitudinal extension direction of the wiper may be transverse and/or perpendicular to the wiping direction. An angle between the longitudinal extension direction of the wiper and the wiping direction may range from 30° to 90°.

The first aspect according to the present disclosure is summarized and supplemented in the following. The apparatus comprises the storage container, which stores and/or holds chocolate powder, and the building container to which the chocolate powder is conveyed by the wiper, such that the printing layer is formed therein. By means of the application system the binder material can be dispensed onto the printing layer along a predetermined path. Thereby, a contour or outer contour of one layer of the food product can be formed and the outer contour can be filled with binder material by moving the application system correspondingly. This way, the actual food product can be formed layer by layer, wherein one layer is formed on top of a previously formed layer. In order to generate a single layer of the food product and/or to generate a single printing layer from the chocolate powder that is converted to a layer of the food product by applying the binder material thereon, the storage container platform can be lifted such that a layer of chocolate powder extends over the top of the storage container. The extending layer is then transported by the wiper from the storage container to the building container to generate the printing layer. Once the binder material is applied to this printing layer (i.e. once one layer of the food product is generated), the building container platform can be lowered from the top of the building container, resulting in a free volume between the top of the building container and the previously formed layer of the food product. The process can then be repeated and the free volume on top of the previous layer of the food product can be filled by the wiper with a next printing layer of the chocolate powder, such that the next layer of the food product can be formed by applying the binder material onto this next printing layer.

According to an embodiment, the additive manufacturing apparatus further comprises a binder container for storing the binder material. The binder container comprises at least one heater configured to heat and/or temper the binder material contained within the binder container, such that the binder material is kept in the flowable condition and/or such that the binder material is heated and/or tempered, e.g. to a predetermined temperature. Further, the binder container is in fluid communication and/or fluidly coupled with the application system and configured to supply the binder material in the flowable condition and/or the heated binder material to the application system. To keep the binder material in the flowable condition, the heater can be placed on the binder container, around the binder container and/or in the binder container to heat up and/or temper the binder container and the binder material. For instance, the heater of the binder container can be arranged on an outer surface or wall of the binder container and at least partially surround the binder container along a perimeter thereof. The heater can spirally surround the binder container, e.g. to homogenously heat the outer wall of the binder container and the binder material contained in the binder container. The heater may be a resistive heater, an inductive heater and/or any other type of heater. The heater and/or a temperature thereof may be controlled and/or adjusted by the controller, e.g. by providing a respective control signal to the heater. Further, the binder container can be connected to the application system, e.g. via a conduit and/or tubing, in order to convey and/or supply binder material from the container to the application system. The heater of the binder container can be controlled by the controller such that a temperature of the binder material may be about 25°C to about 75°C, for example about 40°C to about 75°C, about 50°C to about 72°C, preferably about 60°C to about 69°C, and even more preferably about 60°C to about 65°C. By means of the binder container, a supply of binder material in liquid and/or fluid form to the application system can be ensured, e.g. while minimizing or preventing clogging of components of the apparatus by the binder material. Further, using the binder container, binder material comprising a high-quality cocoa butter can be utilized to manufacture the food product, which in turn increases a quality of the entire food product. The heater may be configured to heat, temper and/or cool the binder material.

According to an embodiment, the controller is configured to control and/or adjust, based on controlling the heater of the binder container and/or based on providing a respective control signal to the heater, a temperature of the binder material in the binder container. Preferably, the controller is configured to keep and/or maintain the binder material in the binder container at a temperature of about 25°C to about 75°C, for example about 40°C to about 75°C, about 50°C to about 72°C, preferably about 60°C to about 69°C, and even more preferably about 60°C to about 65°C. This may minimize and/or prevent clogging of components of the apparatus by the binder material, while also ensuring that the binder material or a quality thereof is not adversely affected by overheating the binder material. For example, the binder material may solidify below a certain threshold temperature, such as e.g. below about 30°C. By tempering and/or heating the binder material to a temperature above this threshold temperature, the binder material can be kept in the flowable condition and clogging can effectively be avoided.

Optionally, the apparatus and/or the binder container can comprise one or more temperature sensors, which can detect and/or determine the temperature of the binder material in the binder container. Thereby the controller, the heater and the at least one temperature sensor can form a control loop such that the binder material is kept in the flowable condition. For instance, the controller may be configured to process a signal of the temperature sensor, thereby determining the temperature of the binder material in the binder container. Further, the controller may be configured to actuate the heater in response to and/or in accordance with the temperature sensor, e.g. in response to determining that the temperature of the binder material falls below a predetermined threshold, such as e.g. 25°C, 28°C, 30°C, 35°C, 40°C, 45°C, 50°C, 55°, 60°C, 65°C, 70°C and/or 75°C. Generally, such configuration may allow to efficiently and reliably heat and/or temper the binder material in the binder container. It should be noted that the binder material in the binder container can be tempered, heated and/or cooled in order to keep the binder material at a desired temperature or temperature range.

Optionally, the binder container can comprise an insulation in order to reduce transfer or loss of thermal energy to the surrounding of the binder container. Any suitable insulation material can be used for insulating the binder container. This may further increase an efficiency of heating and/or tempering the binder material in the binder container.

According to an embodiment, the binder container is coupled to a pressure source for supplying a pressurized gas, e.g. pressurized air and/or an inert gas, to the binder container, such that the binder material is pneumatically suppliable from the binder container to the application system. In other words, the binder material can be conveyed by pneumatic means from the binder container to the application system. Accordingly, no pump or pumping device may be required for supplying the binder material to the application system. This may simplify a construction and design of the apparatus and also avoid additional components that can get clogged by the binder material. Also, pneumatically supplying the binder material to the application system may be advantageous in terms of hygienic aspects.

Accordingly, the binder container may refer to a pressure vessel or container. For instance, the binder container can comprise a pneumatic valve or pressure valve to control the pressure applied to the binder material and to control the overall flow or flow rate of binder material from the binder container to the application system. The pneumatic valve can be controlled by the controller, e.g. in accordance with and/or in dependence of the heating element of the application system, a heating device of a conduit, and/or the heater of the binder container. Further, the pneumatic valve can be controlled by the controller in accordance with and/or in dependence of one or more temperature sensors of the apparatus. The pneumatic valve or pressure valve of the binder container can e.g. be connected to a compressor or to any other source of pressurized gas, such as a gas container.

According to an embodiment, the additive manufacturing apparatus further comprises at least one conduit and/or tubing fluidly coupling the binder container with the application system. The conduit is configured to supply the binder material from the binder container to the application system. The conduit may be coupled and/or connected to an outlet of the binder container and to an inlet of the application system. Further, the at least one conduit comprises at least one heating device for heating and/or tempering the binder material supplied through the conduit to the application system. Further, the controller is configured to control and/or adjust, based on controlling the heating device of the conduit, a temperature of the binder material in the conduit. The controller is further configured to keep and/or maintain the binder material in the conduit at a temperature of about 25°C to about 75°C, for example about 40°C to about 75°C, about 50°C to about 72°C, preferably about 60°C to about 69°C, and even more preferably about 60°C to about 65°C, such that the binder material is kept in the flowable condition. The heating device can at least partially surround and/or be in contact with the conduit and/or an outer wall thereof. The heating device may be a resistive heating device, an inductive heating device and/or any other type of heating device. The heating device may be configured to temper, heat and/or cool the binder material supplied through the conduit to the application system.

Optionally, one or more temperature sensors can be arranged at and/or in the conduit for determining a temperature of the binder material in the conduit. Thereby the controller, the heating device and the at least one temperature sensor arranged at and/or in the conduit can form a control loop such that the binder material is kept in the flowable condition. For instance, the controller may be configured to process a signal of the temperature sensor, thereby determining the temperature of the binder material in the conduit. Further, the controller may be configured to actuate the heating device arranged at the conduit in response to and/or in accordance with the temperature sensor, e.g. in response to determining that the temperature of the binder material falls below a predetermined threshold, such as e.g. 25°C, 28°C, 30°C, 35°C, 40°C, 45°C, 50°C, 55°, 60°C, 65°C, 70°C and/or 75°C. Generally, such configuration may allow to efficiently and reliably heat and/or temper the binder material in the conduit. It should be noted that the binder material in the conduit can be tempered, heated and/or cooled in order to keep the binder material at a desired temperature or temperature range.

Optionally, the conduit can comprise an insulation in order to reduce a transfer or loss of thermal energy to the surrounding of the conduit. Any suitable insulation material can be used for insulating the conduit. This may further increase an efficiency of heating and/or tempering the binder material in the conduit. Further, cooling and/or solidifying of the binder material may effectively be prevented. This may avoid clogging of components of the additive manufacturing apparatus by the binder material.

According to an embodiment, the application system, the at least one conduit and/or the binder container can be at least partially insulated. In other words, the surfaces of the application system, the conduit and the binder container can be at least partly covered with an insulation material such that less thermal energy is transferred or lost to the surrounding of the apparatus and/or its components.

According to an embodiment the additive manufacturing apparatus further comprises at least one temperature sensor for determining a temperature of the binder material in at least a part of the application system, at least a part of a binder container and/or at least a part of a conduit fluidly coupling the binder container and the application system. The controller is further configured to control and/or adjust a temperature of the binder material in the at least part of the application system, the at least part of the binder container, and/or the at least part of the conduit, such that the binder material is kept in the flowable condition and/or such that the temperature of the binder material is about 25°C to about 75°C, for example about 40°C to about 75°C, about 50°C to about 72°C, preferably about 60°C to about 69°C, and even more preferably about 60°C to about 65°C. For instance, a plurality of temperature sensors can be arranged at various components of the apparatus, including e.g. the binder container, the conduit and/or the application system. The controller can receive and/or process signals of each of the temperature sensors to determine a current temperature and/or to derive temperature information indicative of the temperature of the binder material in each of the binder container, the conduit and the application system. Based on this temperature information and/or based on the signals of one or more temperature sensors, the controller can actuate one or more of the heating element of the application system, the heating device of the conduit and the heater of the binder container. Particularly, the controller can be configured to actuate the heating element of the application system, the heating device of the conduit and the heater of the binder container in a coordinated and/or synchronized manner, such that the temperature of the binder material is substantially constant on its way from the binder container through the conduit and to the application system. Therein, the temperature of the binder material can be about 25°C to about 75°C, for example about 40°C to about 75°C, about 50°C to about 72°C, preferably about 60°C to about 69°C, and even more preferably about 60°C to about 65°C. This may allow to avoid and/or reduce clogging, while also ensuring that the binder material or a quality thereof is not adversely affected by overheating. Such configuration can allow to increase an overall efficiency of the apparatus as well as an overall quality of the food product.

According to an embodiment, the controller is further configured to control and/or adjust the temperature of the binder material in the at least part of the application system, the at least part of the binder container, and/or the at least part of the conduit based on an ambient temperature, an ambient air pressure and/or an ambient humidity. For example, the controller can acquire and/or determine the ambient temperature, an ambient air pressure and/or an ambient humidity of the additive manufacturing apparatus. For this purpose, the apparatus can comprise one or more corresponding sensors to determine the ambient temperature, an ambient air pressure and/or an ambient humidity. Alternatively or additionally data relating to and/or indicative of the ambient temperature, the ambient air pressure and/or the ambient humidity can be retrieved and/or accessed by the controller via a respective interface, e.g. from a database, a data storage, a storage medium, the Internet or the like. This may allow to further fine-tune a temperature control of the binder material. Moreover, efficiency of the apparatus as well as the overall quality of the food product may be enhanced. Moreover, this may allow maintaining a constant and/or homogenous quality of various food products, e.g. food products manufactured at different times, at which the ambient temperature, the ambient air pressure and/or the ambient humidity differ.

According to an embodiment, the controller is configured to calculate and/or determine a viscosity of the binder material depending on and/or in dependence of the temperature of the binder material within the binder container, the conduit and/or the application system. Furthermore, the controller is configured to adjust the temperature of the binder material within the binder container, the conduit and/or the application system to establish and/or maintain a target (or desired) viscosity of the binder material, such as e.g. a viscosity below about 2 Pa*s, for example below about 1.5 Pa*s, below about 1.2 Pa*s, below about 1.0 Pa*s, preferably below about 0.9 Pa*s, and more preferably about 0.8 Pa*s. By way of example, a look-up table may be stored and/or accessed by the controller. Based on the look-up table and based on one or more sensor signals of one or more temperature sensors the controller may determine an actual viscosity of the binder material and/or the target viscosity of the binder material that should preferably be reached.

Alternatively or additionally the look-up table may contain information allowing the controller to precisely control the heating element of the application system, the heating device of the conduit and/or the heater of the binder container. For instance, one or more response curves may be stored in the look-up table and/or a data storage, based on which the controller can actuate one or more of the heating element of the application system, the heating device of the conduit and/or the heater of the binder container.

According to an embodiment, the controller is configured to displace and/or move the storage container platform and the building container platform stepwise relative to each other, such that in each step a printing layer of the chocolate powder is formed in the building container. This may further include actuating the wiper to transfer chocolate powder from the storage container to the building container. Accordingly, the controller can be configured to displace the storage container platform and the building container platform layer by layer or stepwise to form the food product. With each layer or step, a printing layer of chocolate powder can be formed in the building container based on actuating the wiper. Alternatively or additionally, the printing layer and/or each printing layer has an extension length and/or thickness that is measured along and/or parallel to the displacement axis between 0.1 mm and 5 mm. Preferably, the extension length and/or thickness of the printing layer can be between 0.1 mm and 2 mm.

According to an embodiment, the application system and/or the wiper is configured to be movable along an entire extension length, extension, and/or length of the storage and the building container, such that the wiper can be moved across (and/or over) an entire area (e.g. cross-sectional area) of the storage container and across (and/or over) an entire area (e.g. cross-sectional area) of the building container. Therein, the building container and the storage container can be located next to each other and/or in juxtaposition.

According to an embodiment, the application system and/or the wiper comprises a belt drive with a pretensioning device. Further, the pretensioning device comprises at least one fixed deflection pulley and at least one adjustable deflection pulley. The application system and/or the wiper can be displaced and/or moved based on actuating the belt drive, e.g. by the controller. The belt drive may be particularly advantageous in terms of costs, a lifetime, a reliability and a precision at which the application system and/or the wiper can be displaced. To achieve an appropriate tensioning of the belt drive over its lifetime the adjustable deflection pulley can be used, e.g. based on actuating an adjustment means. Additionally, the adjustable deflection pulley can be adjusted such that e.g. at different ambient temperatures an appropriate tensioning of the belt can be achieved.

According to an embodiment, the additive manufacturing apparatus comprises a plane, which is located on top of the storage container and the building container. The plane can have one or more cut-outs and/or openings, wherein the building container and the storage container may be arranged at least partially in one of the cut-outs. At least one further recess and/or opening can be provided and/or arranged in the plane, which can be configured to receive chocolate powder and/or binder material, e.g. excessive chocolate powder that is not used for forming the printing layer. The wiper can convey the chocolate powder and/or the binder material over and/or across the further recess. In particular binder material and/or chocolate powder, which remains on the plane can be displaced by the wiper into the further recess such that it cannot interfere with the formation of a printing layer, which could possibly adversely affect the quality of the printing layer and/or the food product.

According to an embodiment, at least a part of the storage container, at least a part of the building container, and/or at least a part of the wiper is tempered, heated and/or cooled to a temperature of about 10°C to 40°C, for example about 15°C to 35°C, preferably about 20°C to about 25°C. In other words, the storage container, the building container and/or the wiper can be tempered, heated and/or cooled to a temperature of about 10°C to 40°C, for example about 15°C to 35°C, preferably about 20°C to about 25°C. This may allow e.g. to reduce a humidity on the surfaces which can result in less lumps within the chocolate powder and/or the binder material. Overall, this may further increase efficiency of the apparatus and the quality of the food product as well as a homogeneity of the latter.

A second aspect of the present disclosure relates to a use of an additive manufacturing apparatus, as described hereinabove and hereinbelow, for manufacturing a layered model and/or a food product from a chocolate, milk and/or cocoa composition.

Any features, functions, and/or elements of the apparatus, as described hereinabove and hereinbelow, equally apply to the use of the apparatus, as described hereinabove and hereinbelow.

A third aspect of the present disclosure relates to a method of manufacturing a layered model and/or food product from a chocolate, milk and/or cocoa mixture with an additive manufacturing apparatus, as described hereinabove and hereinbelow.

Any features, functions, and/or elements of the apparatus, as described hereinabove and hereinbelow, can be features, functions and/or steps of the method, as described hereinabove and hereinbelow, and vice versa.

Accordingly, any disclosure provided hereinabove and hereinbelow with reference to any of the aspects of the present disclosure equally applies to any other aspect of the present disclosure.

The method according to the third aspect comprises the steps of:
- providing a chocolate powder in a storage container and conveying at least a part of the chocolate powder from the storage container to a building container, thereby forming a printing layer of the chocolate powder in the building container;
- heating a binder material comprising at least cocoa butter such that at least a part of the binder material is in a flowable condition; and
- selectively applying, using an application system, the heated binder material along a predetermined path onto at least a part of the printing layer of the chocolate powder, thereby forming a layer of the layered model and/or the food product.

Therein, forming the printing layer can comprise raising the storage container platform of the storage container by at least one layer (or by a distance corresponding to the thickness of at least one layer) and lowering the building platform of the building container by at least one layer (or by a distance corresponding to the thickness of at least one layer). Further, the method may comprise conveying and/or transferring chocolate powder with the wiper to the building container. For each layer of the food product these steps can be repeated such that the food product can be manufactured layer by layer. Furthermore, the binder material can be kept in a flowable condition by heating the binder material throughout the manufacturing process. Each layer can be generated by selectively applying the heated binder material onto the respective printing layer formed by chocolate powder. The binder material and the chocolate powder can crosslink with each layer and/or with one or more adjacent layers of the food product. The crosslinking between the binder material and the chocolate powder can result in a solid contour or surface. To generate food products of nearly arbitrary geometry, the application system can be displaced along the predetermined path, which can have an arbitrary shape.

To form a printing layer, an amount of chocolate powder may be used which exceeds the amount of chocolate powder that may actually be required for forming a layer of the food product. By conveying an excessive amount of chocolate powder to the building container, it may be ensured that sufficient chocolate powder is used to form the printing layer, e.g. to compensate for a potential compaction of the chocolate powder in the building container. In turn, this may allow to precisely generate each layer of the food product and to precisely form or shape the overall food product. Also, a surface smoothness of the food product may be increased. The amount of chocolate powder actually conveyed to the building container to form a printing layer may be determined based on a dosage factor. Therein, the dosage factor may be indicative of the excessive amount of chocolate powder and/or the overall amount of chocolate powder that is to be conveyed to the building container. Accordingly, the storage container platform may be raised and the building container platform may be lowered based on and/or taking into account the dosage factor. For instance, the controller may determine, based on the dosage factor, a distance, length and/or a number of layers the storage container platform is to be raised for forming a printing layer. Alternatively or additionally, the controller may determine, based on the dosage factor, a distance, length and/or a number of layers the building container platform is to be lowered for forming a printing layer.

It is to be noted that the predetermined path can comprise geometrical information about where to apply the binder material as well as further information, e.g. related to a movement and/or speed of the application system. The predetermined path can further comprise an information when to lower the building container platform and/or to raise the storage container platform, i.e. an information about when a subsequent printing layer is to be formed and/or formation of a current layer is finished. Moreover, the predetermined path can comprise information about when to displace the wiper or any other information related to the manufacturing process.

According to an embodiment, the conveying at least a part of the chocolate powder comprises wiping the at least part of the chocolate powder from the storage container to the building container. In other words, the wiper can push and/or convey an amount of chocolate powder from the storage container to the building container.

According to an embodiment, the method comprises the step of storing the binder material in a binder container and heating the binder material contained in the binder container. The binder material can be stored and heated in the binder container in particular such that the binder material is kept in the flowable condition, as described in detail above with reference to the apparatus. The heating may comprise actuating, e.g. by the controller, a heater of the binder container.

According to an embodiment, the method comprises the step of supplying a pressurized gas to the binder container and/or pneumatically supplying the binder material from the binder container via at least one conduit to the application system. In other words, the binding material flows from the binder container through the conduit into the application system, whereby the flow can be driven by a pressurized gas.

According to an embodiment, the method comprises the step of heating at least a part of the conduit, thereby heating the binder material supplied through the conduit. This may comprise actuating, e.g. by the controller, a heating device of the conduit. Therein, the temperature of the binder material can be about 25°C to about 75°C, for example about 40°C to about 75°C, about 50°C to about 72°C, preferably about 60°C to about 69°C, and even more preferably about 60°C to about 65°C.

According to an embodiment, a distance between adjacent sections of the predetermined path is about 0.5 mm to about 2.0 mm, preferably about 1.0 mm to about 1.5 mm. The predetermined path may e.g. comprise several sections, wherein outer sections can surround inner sections. A distance or orthogonal distance between adjacent sections can be about 0.5 mm to about 2.0 mm, preferably about 1.0 mm to about 1.5 mm, to ensure a homogeneity of the layer of the food product.

Alternatively or additionally, an outer surface of a layer of the food product can constitute a section of the predetermined path. After forming this section, an inner volume or area of the layer can be formed by moving the application system along various sections of the predetermined path, wherein a direction of the movement is alternately changed for consecutive sections of the predetermined path. Also the distance or orthogonal distance between such sections can be about 0.5 mm to about 2.0 mm, preferably about 1.0 mm to about 1.5 mm. It is to be noted, however, that the application system may also be moved in any other pattern along an arbitrary path to form a layer of the food product.

According to an embodiment, the heating of the binder material comprises heating at least a part of the application system, a nozzle of the application system and/or a valve of the application system. This may further comprise actuating, e.g. by the controller, a heating element of the application system. Therein, the temperature of the binder material can be about 25°C to about 75°C, for example about 40°C to about 75°C, about 50°C to about 72°C, preferably about 60°C to about 69°C, and even more preferably about 60°C to about 65°C.

Generally, the applications system and/or any other component, such as the conduit and/or the binder container, through which the binder material flows can be heated and/or preheated such that the binder material is put and/or is kept in the flowable condition, e.g. at a temperature of about 25°C to about 75°C, for example about 40°C to about 75°C, about 50°C to about 72°C, preferably about 60°C to about 69°C, and even more preferably about 60°C to about 65°C.

According to an embodiment, the method comprises determining at least one temperature value or at least one temperature of the binder material in at least one of the application system, the conduit and the binder container. This may comprise processing one or more sensor signals of one or more temperature sensors with the controller. For example, the method can comprise actuating, with the controller, at least one of the heating element of the application system, the heating device of the conduit and the heater of the binder container in response to and/or in dependence of one or more sensor signals of the one or more temperature sensors, as described in more detail with reference to the apparatus.

According to an embodiment, a plurality of food products can be manufactured in parallel. This may be done by moving the application system along a plurality of predetermined paths for each printing layer, such that a layer of each of the food products can be manufactured using a single printing layer of chocolate powder. This can reduce the manufacturing costs and allow to efficiently use the entire building container or an entire area thereof for manufacturing food products.

A software or program may be used to determine a path for each layer of the food product along which the application system may be moved to manufacture or generate the corresponding layer. Such software is also referred to as slicing software, slicer software and/or repetier software. For example, a 3D model of the food product may be generated, e.g. by means of a corresponding software, and the path for each layer may be derived from the model based on the slicer software. Data indicative of the path of each layer may be provided to the additive manufacturing apparatus via an interface and/or a data storage of the additive manufacturing apparatus. However, the additive manufacturing apparatus may also comprise the slicer software. The controller may be configured to process the data indicative of the path of each layer and actuate the application system accordingly to move along the path of each layer.

According to an embodiment, the selectively applying comprises moving the application system such that at least one nozzle of the application system is moved along the predetermined path. Additionally, the selectively applying comprises actuating, e.g. by the controller, at least one valve and/or at least one nozzle of the application system, thereby dispensing binder material onto the printing layer, e.g. while moving the application system. Further, the method may comprise controlling and/or adjusting a flow of the binder material through the application system and/or an amount of binder material dispensed per unit path length along the predetermined path. The flow may optionally be adjusted based on and/or in dependence of a temperature of the binder material in the application system. Further, actuating the valve may comprise opening the valve, closing the valve and/or adjusting a size of an orifice of the valve, through which the binder material is dispensed.

According to an exemplary embodiment, the method comprises the step of lifting a storage container platform of the storage container and lowering a building container platform of the building container. Additionally, at least the steps of forming a printing layer of the chocolate powder in the building container, and selectively applying the heated binder material along a predetermined path onto at least a part of the printing layer of the chocolate powder ,can be repeated to form the food product.

According to an embodiment, the method comprises the step of milling the chocolate powder, sieving the chocolate powder and/or filtering the chocolate powder, such that a particle size of chocolate powder particles of the chocolate powder is less than about 100 µm, less than about 80 µm, less than about 60 µm, less than about 50 µm, less than about 30 µm, or less than about 25 µm. Particularly, a particle size of chocolate powder particles may range from about 15 µm to about 30 µm, from about 15 µm to about 25 µm, or from about 16 µm to about 24 µm. This can result in a high-quality food product.

A fourth aspect of the present disclosure relates to a food product comprising a chocolate, milk and/or cocoa composition, wherein the food product is obtainable or obtained by the method as described hereinabove and hereinafter. The food product can comprise a plurality of interconnected layers. The plurality of interconnected layers can be formed layer by layer on top of one another along a building direction, which may be substantially parallel to the displacement axis. An edge or edge surface of each of the plurality of interconnected layers can be formed substantially parallel to the building direction. Substantially can mean in this context that the edge surface can be tilted by less than +/- 10° with respect to the displacement axis and/or the building direction. Furthermore, the edge surface can comprise in particular no curvature. This can result in an improved surface quality or surface smoothness of the food product.

When forming a 3D object using an additive manufacturing technique, a socalled stair stepping effect may occur at the edges of the layers and/or at an interface between adjacent layers. This stair stepping effect may be significantly reduced for the food product according to present disclosure, which is formed layer by layer using the additive manufacturing apparatus and/or the method, as described hereinabove and hereinbelow. Particularly, the stair stepping effect may be significantly reduced with respect to conventional additive manufacturing techniques, such as e.g. extrusion printing. In turn, the reduced stair stepping effect allows to manufacture food products with complex geometries. Also, a surface smoothness may be increased due to the reduced stair stepping effect.

A further aspect of the disclosure relates to a program element, a computer program, software instructions, and/or a program, which, when executed by the controller of the additive manufacturing apparatus, instructs the additive manufacturing apparatus to execute steps of the method, as described hereinabove and hereinbelow.

A further aspect of the disclosure relates to a computer readable medium storing a program element, a computer program, software instructions, and/or a program, which, when executed by the controller of the additive manufacturing apparatus, instructs the additive manufacturing apparatus to execute steps of the method, as described hereinabove and hereinbelow.

In the following, a composition of the chocolate powder is described with reference to various examples. Such compositions have been found to result in an improved food product having improved quality and texture. It is noted that any of the characteristics of the chocolate powder described hereinbelow can be combined with each other.

The chocolate powder can comprise sugar and chocolate liquor, wherein a particle size (D94) of the chocolate powder particles can be no more than about 100 µm, no more than about 80 µm, no more than about 60 µm, or no more than about 50 µm, no more than about 30 µm, or no more than about 25 µm. Particularly, a particle size of chocolate powder particles may range from about 15 µm to about 30 µm, from about 15 µm to about 25 µm, or from about 16 µm to about 24 µm.

Optionally, the chocolate powder does not contain soy lecithin, lecithin, corn starch, milk powder, anhydrous milk fat, milk powder, maltodextrin and/or anhydrous milk fat. However, the chocolate powder may comprise soy lecithin, lecithin, corn starch, milk powder, anhydrous milk fat, milk powder, maltodextrin and/or anhydrous milk fat.

The sugar of the chocolate powder can be selected from the group consisting of glucose, fructose, galactose, ribose, sucrose, lactose maltose, isomaltose, and trehalose, preferably sucrose. The sugar can be a powdered sugar and/or crystalline powdered sucrose.

A weight ratio of chocolate liquor to sugar in the chocolate powder may range from about from about 10 : 90 to about 60 : 40, from about 20 : 80 to about 50 : 50, from 25 : 75 to about 45 : 55, from about 30 : 70 to about 40 : 60, preferably from about 30 : 70 to about 40 : 60. The weight ratio of chocolate liquor to sugar may range from about from about 10 : 90 to about 60 : 40, preferably from about 20 : 80 to about 55 : 45, more preferably from about 20 : 80 to about 50 : 50, even more preferably from about 25 : 75 to about 50 : 50, still more preferably from about 30 : 70 to about 50 : 50, yet more preferably from about 35 : 65 to about 50 : 50, most preferably from about 40 : 60 to about 50 : 50.

A water content of the chocolate powder may be not more than about 2.5 weight %, preferably not more than about 2 weight %, more preferably not more than about 1 weight %. The water content may range from about 0.01 to about 2.5 weight %, from about 0.01 to about 2 weight %, from about 0.01 to about 1 weight %, from about 0.01 to about 0.8 weight %, or from about 0.01 to about 0.7 weight %, preferably from about 0.01 to about 1 weight %.

The particle size (D94) of the chocolate powder particles may range from about 5 to about 100 µm, from about 10 to about 80 µm, from about 20 to about 60 µm, from about 20 to about 50 µm, from about 15 µm to about 30 µm, from about 15 µm to about 25 µm, or from about 16 µm to about 24 µm..

The sugar of the chocolate powder may be powdered crystalline sucrose, wherein the weight ratio of chocolate liquor to powdered crystalline sucrose may range from about 30 : 70 to about 40 : 60, and wherein the particle size (D94) of the chocolate powder is not more than 50 µm, not more than about 30 µm, or not more than about 25 µm. Particularly, a particle size of chocolate powder particles may range from about 15 µm to about 30 µm, from about 15 µm to about 25 µm, or from about 16 µm to about 24 µm.

The chocolate powder may comprise corn starch, tricalcium phosphate, at least one emulsifying agent, at least one flavor, at least one vegetable fat, milk powder and/or milk fat.

By way of example, the chocolate powder may comprise cocoa mass, cocoa butter, sugar, milk powder, dry malt extract and/or at least one flavor.

The chocolate powder may comprise milk powder and cocoa butter, wherein the weight ratio of chocolate liquor to sucrose may be about 1 : 3 to about 1 : 6, preferably to about 1 : 4 to about 1 : 5, and wherein the weight ratio of chocolate liquor to milk powder may range from about 1 : 2 to about 1 : 4, preferably from about 1 : 2.25 to about 1 : 3.5.

The chocolate powder may fulfill the requirements of the German KakaoVerordnung 2003 as amended on 30 September 2008.

The chocolate powder may, for example, comprise at least 35 weight % of total dry cocoa solids, including at least 18 % cocoa butter and at least 14 % dry non-fat cocoa solids, or at least 25 weight % of total dry cocoa solids, at least 14 % dry milk solids, at least 2.5 weight % dry non-fat cocoa solids, at least 3.5 weight % milk fat and at least 25 % total fat, wherein, if a vegetable fat other than cocoa butter is present, said vegetable fat is at least one vegetable fat selected from the group consisting of mango oil, palm oil, illipe oil, Shorea robusta seed oil, shea butter, and kokum oil, wherein, if animal fat and/or a preparation of animal fat is present, said animal fat and/or said preparation derives solely from milk, provided that the amount of said animal fat and said preparation of animal fat is not more than 40 % of the total weight of the chocolate powder, and provided that the amount of said vegetable fat other than cocoa butter is not more than 5 weight % of the total weight of the chocolate powder after deduction of any added flavours and any animal fat and any preparation of animal fat, and provided that said chocolate powder does not contain any ground cereal product or starches, wherein, preferably, the dry milk solids are obtainable by partly or wholly dehydrating whole milk, semi- or full-skimmed milk, cream, or from partly or wholly dehydrated cream, butter or milk fat.

In the following a composition of the binder material is described with reference to various examples. Such compositions have been found to result in an improved food product having improved quality and texture. It is noted that any of the characteristics of the binder material described hereinbelow can be combined with each other.

The binder material can comprise (a) chocolate liquor and cocoa butter which may optionally be deodorized or refined, or (b) deodorized cocoa butter, or (c) refined cocoa butter, or (d) aqueous ethanol containing ethanol in a concentration of 45 to 75 % by volume, preferably 50 to 70 % by volume, more preferably 55 to 65 % by volume, most preferably 58 to 62 % by volume.

The cocoa butter of the binder material may be deodorized or refined, and /or filtered.

The cocoa butter of the binder material may be liquid cocoa butter and the chocolate liquor may comprise solid chocolate liquor particles.

A weight ratio of chocolate liquor to cocoa butter in the binder material may range from about 3 : 1 to about 1: 3, from about 2 :1 to about 1 : 2, or from about 1.6 : 1 to about 1 : 1.6, preferably from about 1.6 : 1 to about 1 : 1.6.

A viscosity of the binder material may be less than about 10 Pa·s, less than about 5 Pa-s, less than about 1 Pa-s, or less than about 0.40 Pa·s (e.g. at 40 °C), preferably less than about 0.40 Pa·s (e.g. at 40 °C).

It is to be noted that the method of manufacturing the food product can comprise a step of manufacturing the chocolate powder and/or the binder material according to one or more of the exemplary compositions of the chocolate powder and/or the binder material described hereinabove.

The term "sugar" refers to mono-, di-, or polysaccharides, preferably in the natural occurring D-configuration. Non-limiting examples of monosaccharides comprise glucose, fructose, galactose, mannose, and ribose. Non-limiting examples of disaccharides comprise sucrose, lactose, maltose, isomaltose, and trehalose. The sugar can be a refined or unrefined sugar. Additionally, the sugar may be in granulated or powdered form and in a crystalline and/or amorphous form.

"Chocolate liquor" (also "cocoa liquor" or "cocoa mass") is obtained by fermenting, drying, roasting and crushing cocoa beans (Theobroma cacao) to obtain cocoa nibs. These cocoa nibs are then milled to afford chocolate liquor. The weight % of fat (cocoa butter) in common chocolate liquors is around 50 - 60 %.

"Cocoa butter" is part of chocolate liquor and is obtained by pressing it out of chocolate liquor. Cocoa butter can be deodorized in order to remove offflavours. Likewise, cocoa butter can be refined in order to remove offflavours. Alternatively or in addition to deodorizing or refining, cocoa butter can be filtered in order to remove fine particles remaining from the manufacturing process. The main ingredients of cocoa butter comprise the fatty acids stearic acid, oleic acid, palmitic acid, and linoleic acid. Cocoa butter can solidify in a Type I, Type II, Type II, Type IV, Type V, or Type VI crystal structure. Among other attributes, the different crystal structures of cocoa butter have different melting points of around 17 °C (Type I), 23 °C (Type II), 26 °C (Type III), 28 °C (Type IV), 34 °C (Type V), and 36 °C (Type VI). Type V crystals are the preferred crystals for consumer chocolate. Type V cocoa butter is desirable in terms of its firm and stable texture, good snap and a melting point slightly below body temperature. Cocoa butter of Types I to IV melts too easily and has a poor snap. Cocoa butter of Type V is more solid and takes a long duration to form.

The term "chocolate" refers to any product comprising sugar, cocoa butter and chocolate liquor. The KakaoV 2003 sets out a stricter definition for chocolate. According to the German KakaoV 2003 which implements the EU directive 2000/36 of the European Parliament and the Council of 23 June 2000, a chocolate is required to fulfill certain requirements. Most importantly, a chocolate must contain at least 35 weight % of total dry cocoa solids, including at least 18 % cocoa butter and at least 14 % dry non-fat cocoa solids. If animal fat and/or a preparation of animal fat is present in said chocolate, said animal fat and/or said preparation derives solely from milk and the amount of said animal fat and said preparation of animal fat is not more than 40 % of the total weight of the chocolate. If a vegetable fat other than cocoa butter is present in said chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the chocolate after deduction of any added flavours and any animal fat and any preparation of animal fat. According to the German KakaoV, chocolate must not contain any ground cereal products or starches. Similarly, a milk chocolate must contain at least 25 weight % of total dry cocoa solids, at least 14 % dry milk solids, at least 2.5 weight % dry non-fat cocoa solids, at least 3.5 weight % milk fat and at least 25 % total fat. If animal fat and/or a preparation of animal fat is present in said milk chocolate, said animal fat and/or said preparation derives solely from milk and the amount of said animal fat and said preparation of animal fat is not more than 40 % of the total weight of the milk chocolate. If a vegetable fat other than cocoa butter is present in said milk chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the milk chocolate after deduction of any added flavours and any animal fat and any preparation of animal fat. According to the German KakaoV, milk chocolate must not contain any ground cereal products or starches.

The term "particle size (D₉₄)" refers to the diameter of a particle distribution, wherein 94 vol. % of the particles have a smaller diameter. The D₉₄ particle size can e.g. be measured by laser diffraction or dynamic light scattering methods according to ISO 13320:1999. The particle size may be determined by laser diffraction using a Mastersizer 3000 (Malvern Instruments Ltd.).

The term "milling" as used herein refers to any process to decrease the particle size and should be understood to comprise for example rolling and/or grinding. Typically, ball mills or rolls are used to decrease the particle size.

The term "binder" refers to any substance that can be used to bind the powder during the binder deposition process. It is necessary that the binder is fluid or fluid-like when applied to the powder. If the binder is solid at ambient temperature, this can be achieved by warming the binder to a temperature above its melting point. However, it is possible that the binder is a heterogeneous mixture when applied to the powder and contains at least two components, wherein one component is fluid and another component is solid.

The term "about" in respect to a measurable unit refers to normal deviations of said measurable unit. Such deviations depend on the precision of the measuring apparatus or they depend on statistical deviations that are expected by the skilled person. It is to be understood that the term "about" means a deviation of ± 15 %, preferably ± 10 %, more preferably ± 5 %.

"Emulsifiers" are compounds that facilitate the heterogeneous mixing of two otherwise immiscible liquids, such as a lipophilic and a lipophobic fluid to form an emulsion. Emulsifiers are used in chocolates to provide the desired consistency and texture. Furthermore, emulsifiers may increase temperature and moisture sensitivity of the chocolate. Non-limiting examples are lecithin, mono-and diglycerides of fatty acids, sorbitan tristearate, and ammonium phosphatides.

Flavours are substances that have a distinct taste and/or smell and they may be of natural or artificial origin. Non-limiting examples of flavours comprise vanillin, piperonal, ethylvanilin, methylvanilin, alpha-amylcinnamaldehyde, cinnamaldehyde, anisylacetone, hydroxicitronellal, 6-methylcoumarin, piperonylisobutyrate, propenyl guaethol, vanilinacetate, benzaldehyde, diacetyl, isoamylacetate, ethylpropionate, limonene, allylhexanoate, ethylmaltol, and ethyl formate.

Coloring additives are edible artificial or natural compounds that impart the color of food. Non-limiting examples of coloring additives comprise carotenoids, lutein, turmeric, caramel, saffron, and paprika.

Fats are esters of glycerol. Vegetable fats are fats that are derived from plants. Non-limiting examples of vegetable fats are mango oil, palm oil, illipe oil, Shorea robusta seed oil, shea butter, and/or kokum oil. The terms "oil", "fat" and "butter" are often used as synonyms and are used in the context of this application as synonyms. In other contexts, the term "oil" can refer to glycerol esters that are liquid at a range of about 25 °C, whereas "fats" refer to glycerol esters that are solid at a range of about 25 °C and butter refers to milk fat.

The term "weight %" refers to the ratio of the mass of the respective component in relation to the sum of the mass of all components in percent. The term vol. % refers to the ratio of the volume of the respective component in relation to the sum of the volume of all components in percent.

The meaning of the term "comprising" is to be interpreted as encompassing all the specifically mentioned features as well optional, additional, unspecified ones, whereas the term "consisting of" only includes those features as specified. Therefore, "comprising" includes as a limiting case the composition specified by "consisting of".

In the following embodiments, of the invention are described with reference to the appended drawings.

### Brief description of the drawings

Fig. 1 shows a schematic view of a part of an additive manufacturing apparatus according to an exemplary embodiment.
Fig. 2 shows a schematic sectional view of the part of the additive manufacturing apparatus of Fig. 1.
Fig. 3A shows a schematic perspective view of a part of an additive manufacturing apparatus according to an exemplary embodiment.
Fig. 3B shows a schematic sectional view of the part of the additive manufacturing apparatus of Fig. 3A.
Fig. 4 shows a schematic perspective sectional view of an additive manufacturing apparatus according to an exemplary embodiment.
Fig. 5A shows a schematic block diagram of an additive manufacturing apparatus according to an exemplary embodiment.
Figs. 5B and 5C each show a detailed view of a part of an application system of the additive manufacturing apparatus of Fig. 5A.
Fig. 5D shows a detailed view of a binder container of the additive manufacturing apparatus of Figs. 5A to 5C
Figs. 5E and 5F each illustrate a movement of the application system of the apparatus of Figs. 5A to 5D.
Fig. 6 shows a schematic sectional view of a food product according to an exemplary embodiment.
Fig. 7 shows a schematic top-view of an additive manufacturing apparatus and a food product according to an exemplary embodiment.
Fig. 8 shows a flow chart illustrating steps of a method of manufacturing a food product according to an exemplary embodiment.

The figures are schematic and not true to scale. In the figures, elements which are identical, similar, and/or have identical/similar functions can be marked with identical or similar reference numerals.

### Detailed description of exemplary embodiments

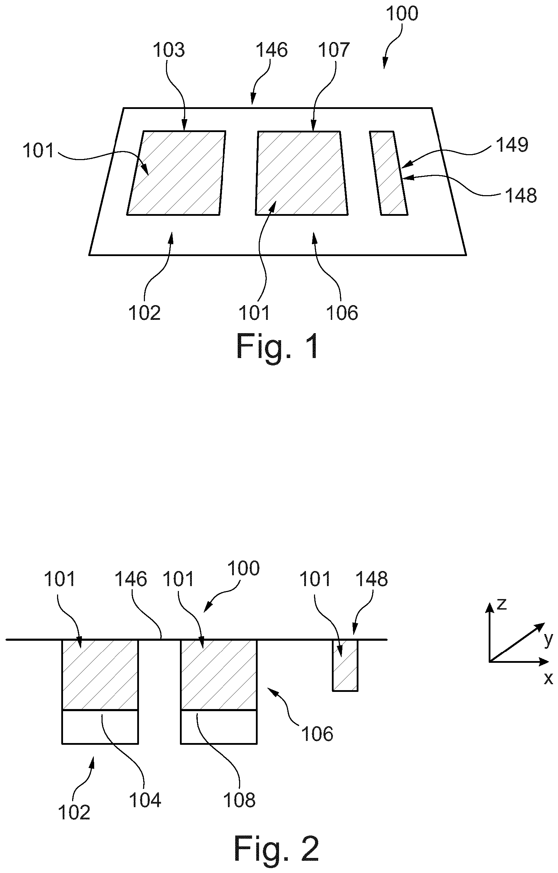

Figure 1 shows a part of an additive manufacturing apparatus 100. Particularly, figure 1 shows a storage container 102 and a building container 106 of the apparatus 100. Figure 2 shows a schematic sectional view of the part of the additive manufacturing apparatus 100 of figure 1.

The storage container 102 is configured to store chocolate powder 101. The storage container 102 further comprises a storage container platform 104, which is displaceable along a displacement axis Z, such that chocolate powder 101 can be conveyed and/or transported to the building container 106 layer by layer.

The building container 106 is also configured to store chocolate powder 101 and comprises a building container platform 108, which is displaceable along the displacement axis Z.

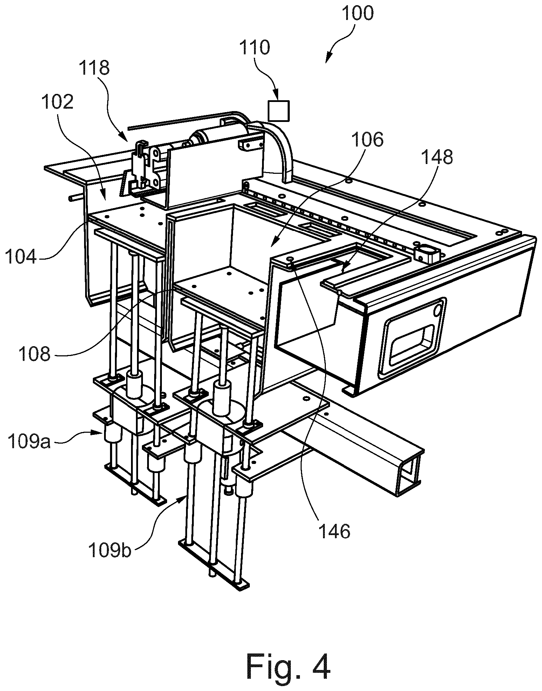

A controller 110 (not shown in figures 1 and 2) can control displacement of the storage container platform 104 and the building container platform 108 along the displacement axis Z, such that the storage container platform 104 and the building container platform 108 are moved in opposite directions along the displacement axis Z during the manufacturing process. Therein, the displacement is performed stepwise to form the food product layer by layer. Particularly, the storage container platform 104 may be lifted and the building container platform 108 may be lowered during the manufacturing process. For this purpose, the apparatus 100 can comprise a suitable drive 109a, 109b (see figure 4) for driving the storage container platform 104 and the building container platform 108, wherein such drive can be actuated by the controller 110.

The apparatus 100 further comprises a plane 146 or working plane 146 having cut-outs 103, 107 or openings 103, 107, wherein the storage container 102 and the building container 106 each may be at least partly arranged in one of the cut-outs 103, 107 or openings 103, 107.

Moreover, the apparatus 100 comprises a recess 148 and/or a compartment 148 at least partly arranged in a further cut-out 149 or opening 149 in the plane 146. In the recess 148 and/or compartment 148, excessive or unused chocolate powder 101 can be disposed and/or stored.

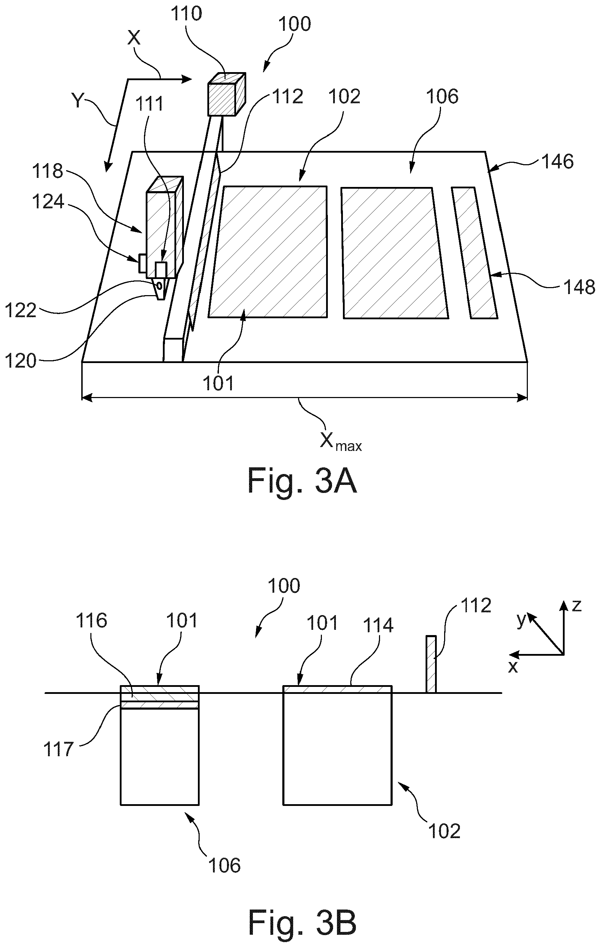

Figure 3A shows a schematic perspective view of a part of an additive manufacturing apparatus 100 according to an exemplary embodiment. Figure 3B shows a schematic sectional view of the part of the additive manufacturing apparatus 100 of figure 3A. If not stated otherwise, the apparatus 100 of figures 3A and 3B comprises the same features and/or elements as the apparatus 100 described with reference to foregoing figures.

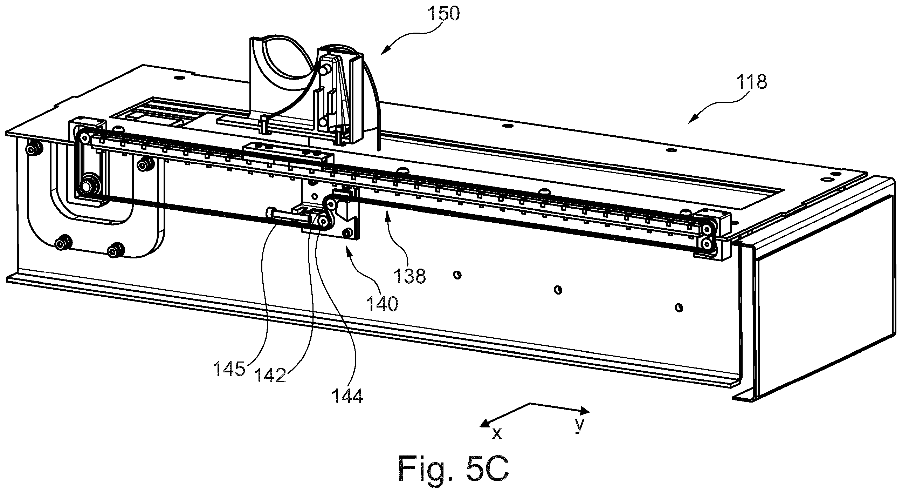

The apparatus 100 of figures 3A and 3B comprises an application system 118. The application system 118 can be displaced and/or moved along the axes Y and X which are orthogonal to the displacement axis Z, e.g. based on actuating a drive 138 (see figure 5C) with the controller 110.

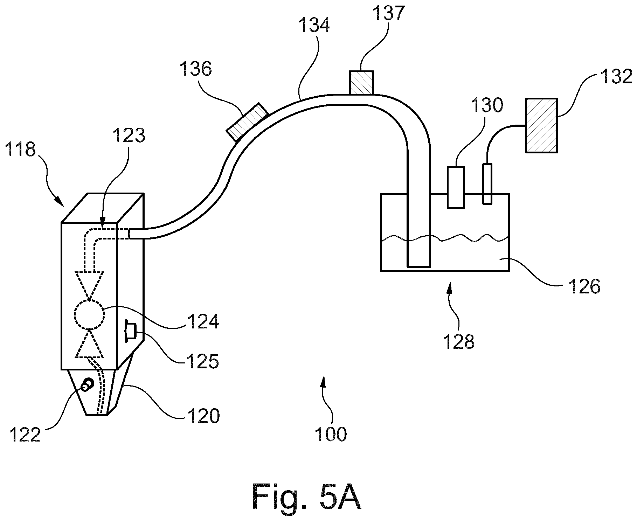

The application system 118 further comprises a nozzle 120 and a heating element 122. Within the application system 118 a valve 124 can be located to regulate a flow of binder material 126 (see e.g. figure 5A), as will be described in more detail with reference to subsequent figures.

The apparatus 100 further comprises a wiper 112 which is configured to convey chocolate powder 101 from the storage container 102 to the building container 106. The wiper 112 can be mounted to and/or fixed to the application system 118. The application system 118 and/or the wiper 112 can be displaceble along the entire extension or length Xₘₐₓ of the plane 146, such that the wiper 112 can be moved over the storage container 102, the building container 106 and the recess 148.

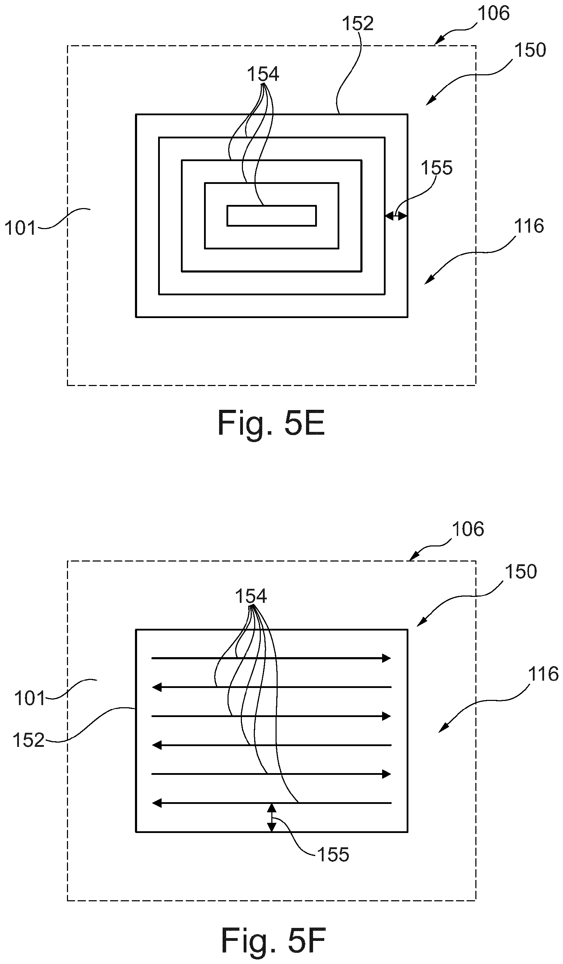

By means of the controller 110, the application system 118 and/or the wiper 112 can be moved along a predetermined path 150 (see figures 5E, 5F), as described in more detail with reference to subsequent figures. Further, the controller 110 is configured to actuate the heating element 122 of the application system 118 such that binder material 126 is dispensed through the application system 118 and/or the nozzle 120 is kept in a flowable condition.

Further, the application system 118 comprises at least one temperature sensor 111 to determine a temperature of the binder material 126 in the application system 118, as will be described in more detail with reference to subsequent figures.

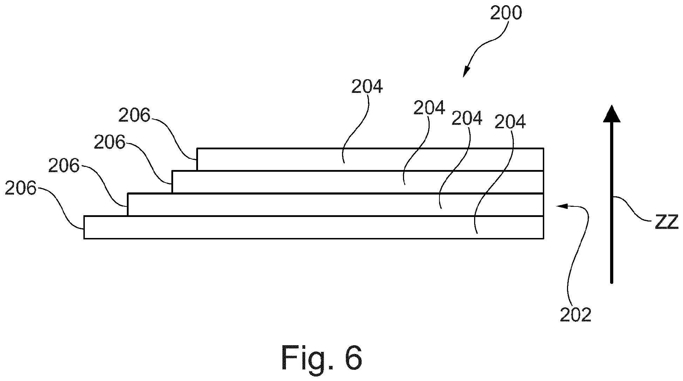

In the sectional view of figure 3B the storage container platform 104 and the building container platform 108 are shown. The building container platform 108 and the storage container platform 104 can be displaced relative to each other along the displacement axis Z in opposite directions. To form a layer of the food product 200 (see figure 6), the storage container platform 104 is raised by a predetermined length or distance, e.g. between 0.1 mm and 5 mm, and the building container platform 108 is lowered by this distance or length. The length or distance by which the storage container platform 104 is raised and by which the building container platform 108 is lowered may be determined based on or taking into account a dosage factor, as described hereinabove.

The storage container platform 104 can be lowered such that an amount 114 of chocolate powder can extend from the top of the storage container 102. Then, the application system 118 and/or wiper 112 may be moved over the storage container 102 and the building container 106 to form a printing layer 116.

The application system 118 can be moved along the predetermined path 150 (see figures 5E, 5F) to selectively apply binder material 126 onto the printing layer 116, thereby generating a layer of the food product 200, as will be described in more detail with reference to subsequent figures. To form a further layer of the food product, this process is repeated.

Figure 4 shows a schematic perspective sectional view of an additive manufacturing apparatus 100 according to an exemplary embodiment. If not stated otherwise, the apparatus 100 of figure 4 comprises the same features and/or elements as the apparatus 100 described with reference to any of the foregoing figures.

In the cross-sectional view of figure 4, a drive 109a for driving and/or displacing the storage container platform 104 and a drive 109b for driving and/or displacing the building container platform 108 are shown. The drives 109a, 109b can comprise an electric motor or any other drive, such as e.g. a pump for hydraulically moving the platforms 104, 108. The drives 109a, 109b may be actuated by the controller 110 in a coordinated and/or synchronized manner as described above with reference to figures 3A and 3B.

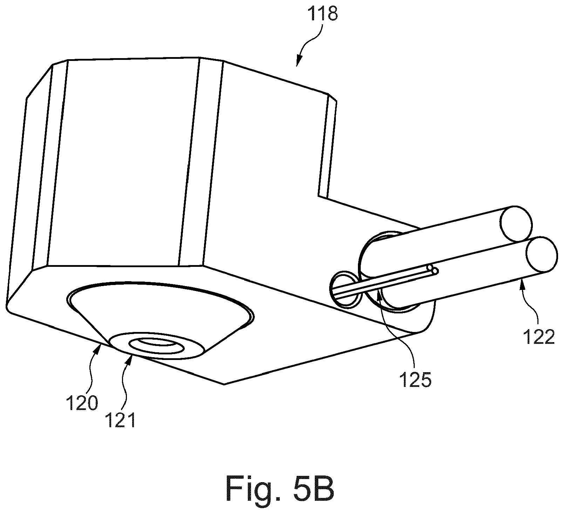

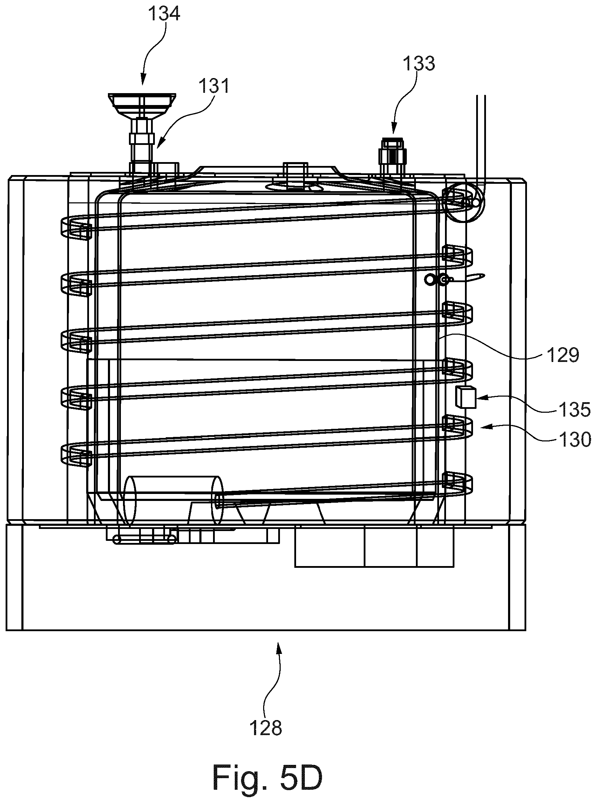

Figure 5A shows a schematic block diagram of an additive manufacturing apparatus 100 according to an exemplary embodiment. Figures 5B and 5C each show a detailed view of a part of an application system 118 of the additive manufacturing apparatus 100 of figure 5A. Figure 5D shows a detailed view of a binder container 128 of the additive manufacturing apparatus 100 of figures 5A to 5C. Figures 5E and 5F each illustrate a movement of the application system 118 of the apparatus 100 of Figs. 5A to 5D. If not stated otherwise, the apparatus 100 of figures 5A to 5D comprises the same features and/or elements as the apparatus 100 described with reference to any of the foregoing figures.

The application system 118 comprises a nozzle 120 with an opening 121 or orifice 121 for dispensing binder material 126, which can be supplied via a tubing 123 to the nozzle 120.

The application system 118 further comprises one or more heating elements 122 to heat the binder material 126 flowing through the application system 118. The heating element(s) 122 can be controlled and/or actuated by the controller 110.

The application system 118 further comprises a valve 124 that can be electronically controlled by the controller 110 to control a flow of binder material 126 through the application system 118 and/or to control an amount of binder material 126 dispensed from the application system 118 per unit path length of the predetermined path 150, along which the application system 118 is moved to form a layer of the food product 200.

Further, at least one temperature sensor 125 is arranged at or in the application system 118 for determining a temperature of the binder material 126 in the application system 118. The controller 125 can process sensor signals of the temperature sensor 125 and actuate the heating element 122 accordingly, such that the binder material 126 is kept in the flowable condition and/or at a temperature of about 25°C to about 75°C, for example about 40°C to about 75°C, about 50°C to about 72°C, preferably about 60°C to about 69°C, and even more preferably about 60°C to about 65°C.

The apparatus 100 further comprises a binder container 128 storing the binder material 126. The binder container 128 and the application system 118 are connected and/or coupled to each other by a conduit 134, via which the binder material 126 is supplied from the binder container 128 to the application system 118.

The binder container 128 is connected to a pressurized gas source 132, e.g. a compressor or the like. The pressurized gas source 132 can supply a pressurized gas, e.g. air, into the binder container 128 such that the binder material 126 is conveyed and/or transported into the conduit 134, to the application system 118 and via the nozzle 120 onto the printing layer 116.

The binder container 128 comprises at least one heater 130 for heating the binder material 126 in the binder container 128, as can best be seen in figure 5D. The binder container 128 comprises a compartment 129 which can contain the binder material 126. Around the compartment 129 and/or around an outer wall of the compartment 129 the heater 130 is arranged. The heater 130 can be coil-like formed and surround the compartment 129 along a perimeter or outer circumference thereof. The heater 130 can be controlled by the controller 110.

Apart from that, one or more temperature sensors 135 are arranged at the binder container 128 for determining a temperature of the binder material 126 in the binder container 128. For this purpose, the controller 110 can process sensor signals of the temperature sensor(s) 135 and control the heater 130 accordingly, such the binder material 126 in the binder container 128 is kept at the desired temperature.

For connecting the binder container 128 to the pressurized gas source 132, the binder container 128 comprises a connector 133 or pressure valve 133 that can be coupled to the gas source 132. Via the pressure valve 133 the pressurized gas can be supplied to the compartment 129 and the binder material 126 can pneumatically be transported via an outlet 131 to the conduit 134 to convey the binder material 126 to the application system 118. The pressure valve 133 can also be controlled by the controller 110 to regulate the flow of binder material 126 through the apparatus 100.

To minimize loss of thermal energy, one or both of the binder container 128 and the conduit 134 can be insulated.

The conduit 134 comprises one or more heating devices 136 for heating the binder material 126 flowing through the conduit 134, wherein the one or more heating devices 136 are controlled by the controller 110. Further, at least one temperature sensor 137 can be arranged at the conduit 134 to determine a temperature of the binder material 126 flowing through the conduit 134.

The controller 110 can be configured to process one or more sensor signals of any of the temperature sensors 125, 135, 137 arranged at the application system 118, the conduit 134 and the binder container 128. Further, the controller can be configured to actuate and/or control any of the heating element 122 of the application system 118, the heating device 136 of the conduit 134 and the heater 130 of the binder container 128. Particularly, the controller 110 can be configured to actuate and/or control each of these components 122, 136, 130 in a coordinated and/or synchronized manner, such that the binder material 126 is kept in the flowable condition along its entire path through the apparatus 100. Therein, the binder material 126 can be heated to a temperature of about 25°C to about 75°C, for example about 40°C to about 75°C, about 50°C to about 72°C, preferably about 60°C to about 69°C, and even more preferably about 60°C to about 65°C. Further, the controller 110 can be configured to actuate any of the components 122, 136, 130 in response to determining a temperature of the binder material 126 with any of the temperature sensors 125, 135, 137 that reaches or falls below a predetermined threshold, such as e.g. 25°C, 28°C, 30°C, 35°C, 40°C, 45°C, 50°C, 55°, 60°C, 65°C, 70°C and/or 75°C.. Further, the controller 110 can be configured to maintain a target or desired viscosity of the binder material 126, such as e.g. a viscosity below about 2 Pa*s, for example below about 1.5 Pa*s, below about 1.2 Pa*s, below about 1.0 Pa*s, preferably below about 0.9 Pa*s, and more preferably about 0.8 Pa*s.

Moreover, the controller 110 can be configured to control and/or actuate any of components 122, 136, 130 taking an ambient pressure, an ambient temperature and/or an ambient humidity into account. For this purpose, the apparatus 100 may comprise corresponding sensors and/or data related to one or more of such quantities can be accessed and/or retrieved by the controller 110 from a database, a storage medium, the Internet or the like.

Optionally, at least a part of the storage container 102, at least a part of the building container 106, and/or at least a part of the wiper 112 can be tempered, heated and/or cooled to a temperature of about 10°C to 40°C, for example about 15°C to 35°C, preferably about 20°C to about 25°C.

As can best be seen in figure 5C, the apparatus 100 and/or the application system 118 comprises a belt drive 138 for moving the nozzle 120 along the predetermined path 150 over the printing layer 116 comprising chocolate powder 101. However, any other drive may be used for this purpose. The belt drive 138 is configured to displace the nozzle 120 along the Y axis. The belt drive 138 comprises a pretensioning device 140 with a fixed deflection pulley 142 and an adjustable deflection pulley 144, such that a belt tension can be adjusted, e.g. by actuating a screw 145 at the adjustable deflection pulley 144. For moving the application system 118 along the X axis, a similar drive as the belt drive 138 may be used.

The application system 118 further comprises a supporting structure 150 at which the nozzle 120 or a nozzle head of the application system 118 can be mounted. The supporting structure 150 may be moved along the Y axis by means of the belt drive 138. A further drive (not shown) may be used to move the application system 118 along the X axis.

Figures 5E and 5F illustrate a movement of the application system 118 along the predetermined path 150 over the building container 106, in which the printing layer 116 is formed from chocolate powder 101.

In the example shown in figure 5E, the application system 118 is first actuated to move along an outer contour 152 or an outer section 152 of the predetermined path 150. Once the outer section 152 is printed by applying binder material 126 onto the printing layer 116 along the outer section 152, inner sections 154 of the predetermined path 150 are printed by moving the application system 118 along each of these inner sections 154 and by applying binder material 126 onto the printing layer 116 along each of the inner sections 154 until a volume or area defined by the outer section 152 is filled with binder material 126. Thereby, a layer 204 of the food product 200 (see figure 6) is formed. A distance 155 or orthogonal distance 155 between adjacent sections 152, 154 can be about 0.5 mm to about 2.0 mm, preferably about 1.0 mm to about 1.5 mm, to ensure a homogeneity of the layer 204 of the food product 200. When the application system 118 is moved from one section 152, 154 to another, the valve 124 of the application system 118 may be closed and/or actuated.

In the example shown in figure 5F, the application system 118 is first actuated to move along an outer contour 152 or an outer section 152 of the predetermined path 150. Once the outer section 152 is printed by applying binder material 126 onto the printing layer 116 along the outer section 152, inner sections 154 of the predetermined path 150 are printed by moving the application system 118 along various sections 154 of the predetermined path 150, wherein a direction of the movement of the application system 118 is alternately changed for consecutive sections 154 of the predetermined path 154. Thereby, the layer 204 of the food product 200 (see figure 6) is formed. Also in this case, a distance 155 or orthogonal distance 155 between adjacent sections 152, 154 can be about 0.5 mm to about 2.0 mm, preferably about 1.0 mm to about 1.5 mm, to ensure a homogeneity of the layer 204 of the food product 200. When the application system 118 is moved from one section 152, 154 to another, the valve 124 of the application system 118 may be closed and/or actuated.

It is to be noted that the apparatus 100 can further comprise a user interface (not shown) allowing an operator to set various settings for the controller 110, such as e.g. the distance by which the storage container platform 104 and the building container platform 108 are moved for each layer 204 and/or the temperature of the binder material 126 that should be maintained during the manufacturing process.

Further, the controller 110 may have access to and/or retrieve data of a slicing software, e.g. in order to derive information related to the predetermined path 150 for each layer 204 of the food product 200. Data of the slicing software may be provided via a corresponding interface and/or a data storage of the apparatus 100. However, the apparatus 100 may also comprise the slicing software.

Figure 6 shows a schematic sectional view of a food product 200 according to an exemplary embodiment. The food product 200 can refer to a layered model 200. The food product 200 is manufactured along a building direction ZZ, which can be parallel to the displacement axis Z. The food product 200 can comprise a plurality or stack 202 of interconnected layers 204. Each layer 204 has an edge surface 206 that is substantially parallel to the building direction ZZ. This may allow for an increased surface smoothness of the food product, e.g. when compared to products manufactured using an extrusion process.

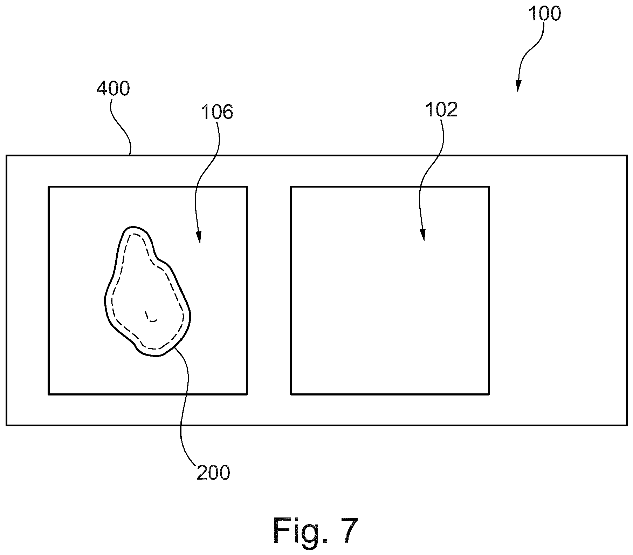

Figure 7 shows a schematic top-view of an additive manufacturing apparatus 100 and a food product 200 according to an exemplary embodiment. If not stated otherwise, the apparatus 100 and the food product 200 of figure 7 comprises the same features and/or elements as the apparatus 100 and food product 200 described with reference to any of the foregoing figures.

As illustrated in figure 7, the food product 200 can be manufactured within the building container 106. The chocolate powder 101 can be stored in the storage container 102 and supplied to the building container 106 using the wiper 112, and the application system 118 can be used to apply the binder material 126 onto each printing layer 116 sequentially formed during the manufacturing process to form the layers 204 of the food product 200, as described in detail with reference to the foregoing figures.

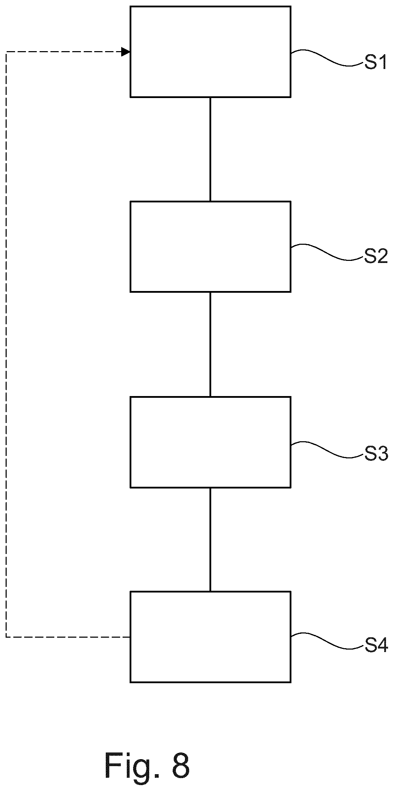

Figure 8 shows a flow chart illustrating steps of a method of manufacturing a food product 200 according to an exemplary embodiment. The method may likewise refer to a method of operating the apparatus as described with reference to figures 1 to 7.

The method 300 encompasses a step S1, in which a chocolate powder 101 is provided in the storage container 102 and conveyed to the building container 106. Thereby, a printing layer 116 is formed. Step S1 can comprise wiping the chocolate powder 101 with the wiper 112 from the storage container 102 to the building container 106.

Furthermore, in step S2 the binder material 126 is heated such that it is brought to and/or kept in a flowable condition. The heating of the binder material 126 can comprise actuating one or more of the heating element 122 of the application system 118, the heating device 136 of the conduit 134 and the heater 130 of the binder container 128. Further, step S2 can comprise adjusting a temperature of the binder material 126 e.g. based on one or more temperature sensors 125, 135, 137.

In step S3, the binder material 126 is selectively applied onto the printing layer 126 to form a layer 204 of the product 200. Optionally, step S3 can comprise supplying pressurized gas to the binder container 128 to transport the binder material 126 from the binder container 128 through the conduit 134 to the application system 118.

Further, in step S4, the storage container platform 104 may be lifted and/or displaced by a predetermined distance and the building platform 108 may be lowered by this distance.

Steps S1 to S4 may then be repeated, wherein in each iteration one layer 204 of the food product 200 is stacked on top of the previous layer 204 until the entire food product 200 is manufactured.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. An additive manufacturing (100) apparatus for manufacturing a food product (200) from a chocolate, milk and/or cocoa composition, the apparatus comprising:
- a storage container (102) having a storage volume, wherein the storage container (102) is configured to be at least partially filled with a chocolate powder (101) and comprises a storage container platform (104) displaceably arranged along a displacement axis (Z),
- a building container (106) having a building volume, wherein the building container (106) is configured to be at least partially filled with the chocolate powder (10) and comprises a building container platform (108) displaceably arranged along the displacement axis (Z),
at least one controller (110) configured to control displacement of the storage container platform (104) and the building container platform (108), such that the storage container platform (104) and the building container platform (108) are displaced in opposite directions along the displacement axis (Z);
- a wiper (112) configured to convey an amount (114) of the chocolate powder (100) from the storage container (102) to the building container (106) to form a printing layer (116) of the chocolate powder in the building container (106),
- an application system (118) configured to apply a binder material (126), which comprises at least cocoa butter, to the printing layer (116), the application system comprising at least one nozzle (120), at least one heating element (122) for heating the binder material (126), and at least one valve (124) for controlling a flow of the binder material, wherein the application system (118) is movable along at least two axes (X, Y) relative to the building container (106), and
wherein the controller (110) is further configured to control a movement of the application system (118), a temperature of the binder material based on controlling the at least one heating element (122), and the at least one valve (124), such that the binder material (126) is kept in a flowable condition and is selectively applied to the printing layer (116) to manufacture the food product.

2. The additive manufacturing apparatus according to claim 1, further comprising:
a binder container (128) for storing the binder material (126),
wherein the binder container (128) comprises at least one heater (130) configured to heat the binder material (126) such that the binder material (126) is kept in the flowable condition,
wherein the binder container (128) is in fluid communication and/or fluidly coupled with the application system (118) and configured to supply the binder material (126) in the flowable condition to the application system (118).

3. The additive manufacturing apparatus according to claim 2,
wherein the controller (110) is configured to control, based on controlling the heater (130) of the binder container, a temperature of the binder material (126) in the binder container (128), preferably wherein the controller is configured to heat the binder material in the binder container to a temperature of about 25°C to 75°C.

4. The additive manufacturing apparatus according to claim 3,
wherein the binder container (128) is coupled to a pressure source (132) for supplying a pressurized gas to the binder container (128), such that the binder material (126) is pneumatically supplyable from the binder container to the application system (118).

5. The additive manufacturing apparatus according to any of claims 2 to 4, further comprising:
at least one conduit (134) fluidly coupling the binder container (128) to the application system (118) and configured to supply the binder material from the binder container to the application system,
wherein the at least one conduit (134) comprises at least one heating device (136) for heating the binder material (126); and
wherein the controller (110) is configured to control, based on controlling the heating device of the conduit, a temperature of the binder material (126) in the conduit, preferably wherein the controller is configured to heat the binder material in the conduit to a temperature of about 25°C to 75°C.

6. The additive manufacturing apparatus according to any of the preceding claims, further comprising:
at least one temperature sensor (125, 135, 137) for determining a temperature of the binder material (126) in at least a part of the application system (118), at least a part of a binder container (128) and/or at least a part of a conduit (134) fluidly coupling the binder container and the application system,
wherein the controller (110) is further configured to control and/or adjust a temperature of the binder material (126) in the at least part of the application system (118), the at least part of the binder container (128), and/or the at least part of the conduit (134), such that the binder material is kept in the flowable condition and/or such that the temperature of the binder material is about 25°C to 75°C.

7. The additive manufacturing apparatus according to claim 6,
wherein the controller is further configured to control and/or adjust the temperature of the binder material (126) in the at least part of the application system, the at least part of the binder container (128), and/or the at least part of the conduit (134) based on an ambient temperature, an ambient air pressure and/or an ambient humidity.

8. The additive manufacturing apparatus according to any of the preceding claims,
wherein at least a part of the storage container (102), at least a part of the building container (104), and/or at least a part of the wiper (112) is heated and/or cooled to a temperature of about 10°C to 40°C, preferably about 20°C to about 25°C.

9. Use of an additive manufacturing apparatus (110) according to any of the preceding claims for manufacturing a food product (200) from a chocolate, milk and/or cocoa composition.

10. A method (300) for manufacturing a food product (200) from a chocolate, milk and/or cocoa composition with an additive manufacturing apparatus (100) according to any of claims 1 to 8, the method comprising the following steps:
- providing (S1) a chocolate powder in a storage container of the additive manufacturing apparatus and conveying at least a part of the chocolate powder from the storage container to a building container of the additive manufacturing apparatus, thereby forming a printing layer of the chocolate powder in the building container;
- heating (S2), with an application system (118) and at least one controller (110) of the additive manufacturing apparatus, a binder material comprising at least cocoa butter such that at least a part of the binder material is in a flowable condition; and
- selectively applying (S3), using the application system, the heated binder material (126) along a predetermined path onto at least a part of the printing layer of the chocolate powder, thereby forming a layer of the food product.

11. The method according to claim 10, further comprising:
storing (S5) the binder material (126) in a binder container (106) and heating (S6) the binder material (126) contained in the binder container (106).

12. The method according to claim 11, further comprising:
supplying (S7) a pressurized gas to the binder container (128); and/or
pneumatically supplying (S8) the binding material (126) from the binder container (128) via at least one conduit to the application system (118).

13. The method according to claim 12, further comprising:
heating (S9) at least a part of the conduit (134), thereby heating the binder material (126) supplied through the conduit (134).

14. The method according to any of claims 10 to 13,
wherein heating the binder material (126) comprises heating at least a part of the application system (118), at least one nozzle of the application system and/or at least one valve of the application system.

15. The method according to any one of claims 10 to 14, wherein the selectively applying comprises:
moving (S10) the application system (118) such that at least one nozzle (120) of the application system (118) is moved along the predetermined path (400); and/or
actuating (S11) at least one valve (124) and/or at least one nozzle (120) of the application system (118), thereby dispensing at least a part of the binder material to the printing layer to form the layer of the food product.

16. The method according to any one of claims 10 to 15, further comprising:
lifting (S12) a storage container platform (104) of the storage container (102); lowering (S13) a building container platform (108) of the building container (106); and
repeating (S14) at least steps S1and S3, thereby forming a further layer of the food product (200).

17. The method according to any of claims 10 to 16, further comprising:
milling the chocolate powder, sieving the chocolate powder and/or filtering the chocolate powder, such that a particle size of chocolate powder particles of the chocolate powder is less than about 100 µm, less than about 80 µm, less than about 60 µm, less than about 50 µm, less than about 30 µm and/or less than about 25 µm.

## Patentansprüche

1. Vorrichtung (100) zur additiven Herstellung eines Lebensmittelprodukts (200) aus einer Schokoladen-, Milch- und/oder Kakaozusammensetzung, die Vorrichtung aufweisend:
- einen Vorratsbehälter (102) mit einem Vorratsvolumen, wobei der Vorratsbehälter (102) zum zumindest teilweisen Befüllen mit einem Schokoladenpulver (101) ausgebildet ist und eine entlang einer Verschiebeachse (Z) verschiebbar angeordnete Vorratsbehälterplattform (104) aufweist,
- einen Baubehälter (106) mit einem Bauvolumen, wobei der Baubehälter (106) zum zumindest teilweisen Befüllen mit dem Schokoladenpulver (10) ausgebildet ist und eine entlang der Verschiebeachse (Z) verschiebbar angeordnete Baubehälterplattform (108) aufweist,
mindestens eine Steuerungseinheit (110), die so konfiguriert ist, dass sie die Verschiebung der Vorratsbehälterplattform (104) und der Baubehälterplattform (108) steuert, so dass die Vorratsbehälterplattform (104) und die Baubehälterplattform (108) in entgegengesetzten Richtungen entlang der Verschiebungsachse (Z) verschoben werden;
- einen Abstreifer (112), der so konfiguriert ist, dass er eine Menge (114) des Schokoladenpulvers (100) aus dem Vorratsbehälter (102) in den Baubehälter (106) befördert, um eine Druckschicht (116) des Schokoladenpulvers in dem Baubehälter (106) zu bilden,
- ein Auftragssystem (118), das so konfiguriert ist, dass es ein Bindemittelmaterial (126), das mindestens Kakaobutter umfasst, auf die Druckschicht (116) aufträgt, wobei das Auftragssystem mindestens eine Düse (120), mindestens ein Heizelement (122) zum Erhitzen des Bindemittelmaterials (126) und mindestens ein Ventil (124) zum Steuern eines Flusses des Bindemittelmaterials umfasst, wobei das Auftragssystem (118) entlang mindestens zweier Achsen (X, Y) relativ zu dem Baubehälter (106) bewegbar ist, und
wobei die Steuerungseinheit (110) ferner so konfiguriert ist, dass sie eine Bewegung des Auftragssystems (118), eine Temperatur des Bindemittelmaterials basierend auf der Steuerung des mindestens einen Heizelements (122) und des mindestens einen Ventils (124) steuert, so dass das Bindemittelmaterial (126) in einem fließfähigen Zustand gehalten wird und selektiv auf die Druckschicht (116) aufgetragen wird, um das Lebensmittelprodukt herzustellen.

2. Vorrichtung nach Anspruch 1, ferner aufweisend:
einen Bindemittelbehälter (128) zur Lagerung des Bindemittels (126),
wobei der Bindemittelbehälter (128) mindestens eine Heizvorrichtung (130) umfasst, der so konfiguriert ist, dass er das Bindemittelmaterial (126) erwärmt, so dass das Bindemittelmaterial (126) in dem fließfähigen Zustand gehalten wird,
wobei der Bindemittelbehälter (128) in Fluidverbindung und/oder fluidisch mit dem Auftragssystem (118) gekoppelt ist und so konfiguriert ist, dass er das Bindemittelmaterial (126) im fließfähigen Zustand dem Auftragssystem (118) zuführt.

3. Vorrichtung nach Anspruch 2,
wobei die Steuerungseinheit (110) so konfiguriert ist, dass sie basierend auf der Steuerung der Heizvorrichtung (130) des Bindemittelbehälters eine Temperatur des Bindemittelmaterials (126) in dem Bindemittelbehälter (128) steuert, wobei die Steuerungseinheit vorzugsweise so konfiguriert ist, dass sie das Bindemittelmaterial in dem Bindemittelbehälter auf eine Temperatur von etwa 25°C bis 75°C erhitzt.

4. Vorrichtung nach Anspruch 3,
wobei der Bindemittelbehälter (128) mit einer Druckquelle (132) gekoppelt ist, um dem Bindemittelbehälter (128) ein unter Druck stehendes Gas zuzuführen, so dass das Bindemittelmaterial (126) pneumatisch aus dem Bindemittelbehälter in das Auftragssystem (118) zugeführt werden kann.

5. Vorrichtung nach einem der Ansprüche 2 bis 4, ferner umfassend:
mindestens eine Leitung (134), die den Bindemittelbehälter (128) mit dem Auftragssystem (118) fluidisch koppelt und so konfiguriert ist, dass sie das Bindemittelmaterial aus dem Bindemittelbehälter zum Auftragssystem führt,
wobei die mindestens eine Leitung (134) mindestens eine Heizvorrichtung (136) zum Erhitzen des Bindematerials (126) umfasst; und
wobei die Steuerungseinheit (110) so konfiguriert ist, dass sie basierend auf der Steuerung der Heizvorrichtung der Leitung eine Temperatur des Bindemittelmaterials (126) in der Leitung steuert, wobei die Steuerungseinheit vorzugsweise so konfiguriert ist, dass sie das Bindemittelmaterial in der Leitung auf eine Temperatur von etwa 25°C bis 75°C erhitzt.

6. Vorrichtung nach einem der vorangegangenen Ansprüche, ferner aufweisend:
mindestens einen Temperatursensor (125, 135, 137) zur Bestimmung einer Temperatur des Bindemittelmaterials (126) in mindestens einem Teil des Auftragssystems (118), mindestens einem Teil eines Bindemittelbehälters (128) und/oder mindestens einem Teil einer Leitung (134), die den Bindemittelbehälter und das Auftragssystem fluidisch miteinander verbindet,
wobei die Steuerungseinheit (110) ferner so konfiguriert ist, dass sie eine Temperatur des Bindemittelmaterials (126) in dem mindestens einen Teil des Auftragssystems (118), dem mindestens einen Teil des Bindemittelbehälters (128) und/oder dem mindestens einen Teil der Leitung (134) so steuert und/oder einstellt, dass das Bindemittelmaterial in dem fließfähigen Zustand gehalten wird und/oder dass die Temperatur des Bindemittelmaterials etwa 25°C bis 75°C beträgt.

7. Vorrichtung nach Anspruch 6,
wobei die Steuerungseinheit ferner so konfiguriert ist, dass sie die Temperatur des Bindematerials (126) in dem mindestens einen Teil des Auftragssystems, dem mindestens einen Teil des Bindemittelbehälters (128) und/oder dem mindestens einen Teil der Leitung (134) auf der Grundlage einer Umgebungstemperatur, eines Umgebungsluftdrucks und/oder einer Umgebungsfeuchtigkeit steuert und/oder einstellt.

8. Vorrichtung nach einem der vorangehenden Ansprüche,
wobei mindestens ein Teil des Voratsbehälters (102), mindestens ein Teil des Baubehälters (104) und/oder mindestens ein Teil des Abstreifers (112) auf eine Temperatur von etwa 10°C bis 40°C, vorzugsweise etwa 20°C bis etwa 25°C, erwärmt und/oder abgekühlt wird.

9. Verwendung einer Vorrichtung (110) nach einem der vorhergehenden Ansprüche zur additiven Herstellung eines Lebensmittelprodukts (200) aus einer Schokoladen-, Milch- und/oder Kakaozusammensetzung.

10. Verfahren (300) zur additiven Herstellung eines Lebensmittelprodukts (200) aus einer Schokoladen-, Milch- und/oder Kakaozusammensetzung mit einer Vorrichtung (100) nach einem der Ansprüche 1 bis 8, wobei das Verfahren die folgenden Schritte umfasst:
- Bereitstellen (S1) eines Schokoladenpulvers in einem Vorratsbehälter der Vorrichtung zur Herstellung von Zusatzstoffen und Fördern mindestens eines Teils des Schokoladenpulvers aus dem Vorratsbehälter in einen Baubehälter der Vorrichtung zur additiven Herstellung, wodurch eine Druckschicht aus dem Schokoladenpulver in dem Baubehälter gebildet wird;
- Erhitzen (S2) eines Bindematerials, das mindestens Kakaobutter umfasst, mit einem Auftragssystem (118) und mindestens einer Steuerungseinheit (110) der Vorrichtung zur additiven Fertigung, so dass mindestens ein Teil des Bindematerials in einem fließfähigen Zustand ist; und
- selektives Auftragen (S3) des erhitzten Bindematerials (126) unter Verwendung des Auftragssystems entlang eines vorbestimmten Weges auf mindestens einen Teil der Druckschicht des Schokoladenpulvers, wodurch eine Schicht des Lebensmittelprodukts gebildet wird.

11. Verfahren nach Anspruch 10, ferner aufweisend:
Lagern (S5) des Bindematerials (126) in einem Bindemittelbehälter (106) und Erhitzen (S6) des im Bindemittelbehälter (106) enthaltenen Bindematerials (126).

12. Verfahren nach Anspruch 11, ferner aufweisend:
Zuführen (S7) eines unter Druck stehenden Gases zum Bindemittelbehälter (128); und/oder
pneumatisches Zuführen (S8) des Bindematerials (126) aus dem Bindemittelbehälter (128) über mindestens eine Leitung zu dem Auftragssystem (118).

13. Verfahren nach Anspruch 12, ferner aufweisend:
Erhitzen (S9) mindestens eines Teils der Leitung (134), wodurch das durch die Leitung (134) zugeführte Bindemittelmaterial (126) erhitzt wird.

14. Verfahren nach einem der Ansprüche 10 bis 13,
wobei das Erwärmen des Bindemittels (126) das Erwärmen mindestens eines Teils des Auftragssystems (118), mindestens einer Düse des Auftragssystems und/oder mindestens eines Ventils des Auftragssystems umfasst.

15. Verfahren nach einem der Ansprüche 10 bis 14, wobei das selektive Auftragen umfasst:
Bewegen (S10) des Auftragssystems (118), so dass mindestens eine Düse (120) des Auftragssystems (118) entlang des vorbestimmten Weges (400) bewegt wird; und/oder
Betätigen (S11) mindestens eines Ventils (124) und/oder mindestens einer Düse (120) des Auftragssystems (118), wodurch mindestens ein Teil des Bindematerials an die Druckschicht abgegeben wird, um die Schicht des Lebensmittelprodukts zu bilden.

16. Verfahren nach einem der Ansprüche 10 bis 15, ferner aufweisend:
Anheben (S12) einer Vorratsbehälterplattform (104) des Vorratsbehälters (102);
Absenken (S13) einer Baubehälterplattform (108) des Baubehälters (106); und
Wiederholung (S14) mindestens der Schritte S1 und S3, wodurch eine weitere Schicht des Lebensmittelprodukts (200) gebildet wird.

17. Verfahren nach einem der Ansprüche 10 bis 16, ferner aufweisend:
Mahlen des Schokoladenpulvers, Sieben des Schokoladenpulvers und/oder Filtern des Schokoladenpulvers, so dass die Teilchengröße der Schokoladenpulverteilchen des Schokoladenpulvers weniger als etwa 100 µm, weniger als etwa 80 µm, weniger als etwa 60 µm, weniger als etwa 50 µm, weniger als etwa 30 µm und/oder weniger als etwa 25 µm beträgt.

## Revendications

1. Un appareil (100) de fabrication additive pour fabriquer un produit alimentaire (200) à partir d'une composition de chocolat, de lait et/ou de cacao, l'appareil comprenant :
- un conteneur de stockage (102) ayant un volume de stockage, le conteneur de stockage (102) étant configuré pour être au moins partiellement rempli d'une poudre de chocolat (101) et comprenant une plate-forme (104) de conteneur de stockage agencée de manière déplaçable le long d'un axe de déplacement (Z),
- un conteneur de construction (106) ayant un volume de construction, le conteneur de construction (106) étant configuré pour être au moins partiellement rempli avec la poudre de chocolat (10) et comprenant une plate-forme (108) de conteneur de construction agencée de manière déplaçable le long de l'axe de déplacement (Z),
au moins un dispositif de commande (110) configuré pour commander le déplacement de la plate-forme (104) de conteneur de stockage et de la plate-forme (108) de conteneur de construction, de sorte que la plate-forme (104) de conteneur de stockage et la plate-forme (108) de conteneur de construction soient déplacées dans des directions opposées le long de l'axe de déplacement (Z) ;
- un racleur (112) configuré pour transporter une quantité (114) de la poudre de chocolat (100) depuis le conteneur de stockage (102) vers le conteneur de construction (106) pour former une couche d'impression (116) de la poudre de chocolat dans le conteneur de construction (106),
- un système d'application (118) configuré pour appliquer un matériau liant (126), qui comprend au moins du beurre de cacao, sur la couche d'impression (116), le système d'application comprenant au moins une buse (120), au moins un élément chauffant (122) pour chauffer le matériau liant (126), et au moins une vanne (124) pour commander un débit du matériau liant, le système d'application (118) étant mobile selon au moins deux axes (X, Y) par rapport au conteneur de construction (106), et
le dispositif de commande (110) est en outre configuré pour commander un mouvement du système d'application (118), une température du matériau liant en fonction de la commande dudit au moins un élément chauffant (122) et de ladite au moins une vanne (124), de telle sorte en ce que le matériau liant (126) soit maintenu dans un état fluide et soit appliqué sélectivement sur la couche d'impression (116) pour fabriquer le produit alimentaire.

2. L'appareil de fabrication additive selon la revendication 1, comprenant en outre :
un conteneur de liant (128) pour stocker le matériau liant (126),
le conteneur de liant (128) comprenant au moins un appareil chauffant (130) configuré pour chauffer le matériau liant (126) de sorte que le matériau liant (126) soit maintenu dans l'état fluide,
le conteneur de liant (128) étant en communication fluidique et/ou relié fluidiquement avec le système d'application (118) et configuré pour fournir le matériau liant (126) à l'état fluide au système d'application (118).

3. L'appareil de fabrication additive selon la revendication 2,
dans lequel le dispositif de commande (110) est configuré pour commander, en fonction de la commande de l'appareil chauffant (130) du conteneur de liant, une température du matériau liant (126) dans le conteneur de liant (128), le dispositif de commande étant de préférence configuré pour chauffer le matériau liant dans le conteneur de liant à une température allant d'environ 25°C à 75°C.

4. L'appareil de fabrication additive selon la revendication 3,
dans lequel le conteneur de liant (128) est relié à une source de pression (132) pour fournir un gaz sous pression au conteneur de liant (128), de sorte que le matériau liant (126) soit apte à être alimenté pneumatiquement depuis le conteneur de liant vers le système d'application (118).

5. L'appareil de fabrication additive selon l'une quelconque des revendications 2 à 4, comprenant en outre :
au moins un conduit (134) reliant fluidiquement le conteneur de liant (128) au système d'application (118) et configuré pour fournir le matériau liant depuis le conteneur de liant vers le système d'application,
ledit au moins un conduit (134) comprenant au moins un dispositif de chauffage (136) pour chauffer le matériau liant (126) ; et
le dispositif de commande (110) étant configuré pour commander, en fonction de la commande du dispositif de chauffage du conduit, une température du matériau liant (126) dans le conduit, le dispositif de commande étant de préférence configuré pour chauffer le matériau liant dans le conduit à une température allant d'environ 25°C à 75°C.

6. L'appareil de fabrication additive selon l'une quelconque des revendications précédentes, comprenant en outre :
au moins un capteur de température (125, 135, 137) pour déterminer une température du matériau liant (126) dans au moins une partie du système d'application (118), au moins une partie d'un conteneur de liant (128) et/ou au moins une partie d'un conduit (134) reliant fluidiquement le conteneur de liant et le système d'application,
le dispositif de commande (110) étant en outre configuré pour commander et/ou régler une température du matériau liant (126) dans ladite au moins une partie du système d'application (118), ladite au moins une partie du conteneur de liant (128), et/ ou ladite au moins une partie du conduit (134), de sorte que le matériau liant soit maintenu dans l'état fluide et/ou de sorte que la température du matériau liant soit d'environ 25°C à 75°C.

7. L'appareil de fabrication additive selon la revendication 6,
dans lequel le dispositif de commande est en outre configuré pour commander et/ou régler la température du matériau liant (126) dans ladite au moins une partie du système d'application, ladite au moins une partie du conteneur de liant (128) et/ou ladite au moins une partie du conduit (134) en fonction d'une température ambiante, d'une pression d'air ambiant et/ou d'une humidité ambiante.

8. L'appareil de fabrication additive selon l'une quelconque des revendications précédentes,
dans lequel au moins une partie du conteneur de stockage (102), au moins une partie du conteneur de construction (104) et/ou au moins une partie du racleur (112) est chauffée et/ou refroidie à une température allant d'environ 10°C à 40°C, de préférence allant d'environ 20°C à environ 25°C.

9. Utilisation d'un appareil de fabrication additive (110) selon l'une quelconque des revendications précédentes pour fabriquer un produit alimentaire (200) à partir d'une composition de chocolat, de lait et/ou de cacao.

10. Un procédé (300) de fabrication d'un produit alimentaire (200) à partir d'une composition de chocolat, de lait et/ou de cacao avec un appareil (100) de fabrication additive selon l'une quelconque des revendications 1 à 8, le procédé comprenant les étapes suivantes :
- fournir (S1) une poudre de chocolat dans un conteneur de stockage de l'appareil de fabrication additive et transporter au moins une partie de la poudre de chocolat du conteneur de stockage vers un conteneur de construction de l'appareil de fabrication additive, formant ainsi une couche d'impression de la poudre de chocolat dans le conteneur du construction ;
- chauffer (S2), au moyen d'un système d'application (118) et d'au moins un dispositif de commande (110) de l'appareil de fabrication additive, un matériau liant comprenant au moins du beurre de cacao de sorte qu'au moins une partie du matériau liant soit dans un état fluide ; et
- appliquer sélectivement (S3), en utilisant le système d'application, le matériau liant chauffé (126) selon un trajet prédéterminé sur au moins une partie de la couche d'impression de la poudre de chocolat, formant ainsi une couche du produit alimentaire.

11. Le procédé selon la revendication 10, comprenant en outre :
le fait (S5) de stocker le matériau liant (126) dans un conteneur (106) de liant et de chauffer (S6) le matériau liant (126) contenu dans le conteneur (106) de liant.

12. Le procédé selon la revendication 11, comprenant en outre :
le fait (S7) de fournir un gaz sous pression au conteneur de liant (128) ; et/ou
le fait (S8) de fournir pneumatiquement le matériau liant (126) depuis le réservoir (128) de liant via au moins un conduit vers le système d'application (118).

13. Le procédé selon la revendication 12, comprenant en outre :
le fait (S9) de chauffer au moins une partie du conduit (134), chauffant ainsi le matériau liant (126) fourni au moyen du conduit (134).

14. Le procédé selon l'une quelconque des revendications 10 à 13,
dans lequel le chauffage du matériau liant (126) comprend le fait de chauffer au moins une partie du système d'application (118), au moins une buse du système d'application et/ou au moins une vanne du système d'application.

15. Le procédé selon l'une quelconque des revendications 10 à 14, dans lequel l'application sélective comprend :
le fait (S10) de déplacer le système d'application (118) de manière à ce qu'au moins une buse (120) du système d'application (118) soit déplacée le long de la trajectoire prédéterminée (400) ; et/ou
le fait (S11) d'actionner au moins une vanne (124) et/ou au moins une buse (120) du système d'application (118), distribuant ainsi au moins une partie du matériau liant à la couche d'impression pour former la couche du produit alimentaire.

16. Le procédé selon l'une quelconque des revendications 10 à 15, comprenant en outre :
le fait (S12) de soulever une plate-forme (104) de conteneur de stockage du conteneur de stockage (102) ;
le fait (S13) d'abaisser une plate-forme (108) conteneur de construction du conteneur de construction (106) ; et
le fait (S14) de répéter au moins les étapes S1 et S3, formant ainsi une couche supplémentaire du produit alimentaire (200).

17. Le procédé selon l'une quelconque des revendications 10 à 16, comprenant en outre :
le fait de broyer la poudre de chocolat, de tamiser la poudre de chocolat et/ou de filtrer la poudre de chocolat, de sorte qu'une granulométrie des particules de poudre de chocolat de la poudre de chocolat soit inférieure à environ 100 µm, inférieure à environ 80 µm, inférieure à environ 60 µm, inférieure à environ 50 µm, inférieure à environ 30 µm et/ou inférieure à environ 25 µm.
